# EUROPEAN PATENT SPECIFICATION

(11) **EP 1 481 548 B1**
(45) Date of publication and mention of the grant of the patent: **25.03.2009**
(21) Application number: 03719269.7
(22) Date of filing: 20.02.2003
(51) Int. Cl.: H04N 7/16, H04N 7/167

(54) **BROADCAST NETWORK ACCESS-MANAGEMENT SYSTEM AND METHOD FOR MANAGEMENT OF RECEIVERS OPERATING WITHIN BROADCAST NETWORK**
RUNDFUNKNETZWERKZUGANGSVERWALTUNGSSYSTEM UND VERWALTUNGSMETHODE FÜR EMPFÄNGER IN EINEM SOLCHEN NETZWERK
SYSTEME DE GESTION D'ACCES A UN RESEAU DE TELEDIFFUSION ET PROCEDE DE GESTION DE RECEPTEURS FONCTIONNANT DANS LE RESEAU DE TELEDIFFUSION

(30) Priority: 06.03.2002 PL 35264302; 10.06.2002 PL 35437102
(43) Date of publication of application: 01.12.2004
(73) Proprietor: Advanced Digital Broadcast Polska Sp. zo.o., 65-119 Zielona Gora (PL); Advanced Digital Broadcast Ltd., Hsin-Tien City Taipei County 231 (TW)
(72) Inventor: DOGANOWSKI, Wojciech, 65-001 Zielona Gora (PL); CHEN, Sin, Yi, Taipei 111 Taiwan (TW); HEMPHILL, Earl, Stanley, Taipei 111 Taiwan (TW); PAWLOWSKI, Adam, 94-003 Lodz (PL)
(74) Representative: Hudy, Ludwik
(86) International application number: PCT/PL2003/000013
(87) International publication number: WO 2003/075570

(56) References cited:
- EP-A- 0 726 676
- WO-A-00/04718

## Description

The invention relates to a management system of access to a television broadcast network and a method for management of receivers operating within this network.

A management system of access to a broadcast network is known from the US Patent No. 5,748,732 which describes a management system of access to a network and a device verifying access to a network which comprises slave set-top boxes and a master set-top box controlling access to the network. The master set-top box receives slave entitlement information from a central management device and writes the slave entitlement messages to smart slave cards when the latter are inserted in the master set-top box and then read in the slave set-top box.

Furthermore, from the description of WO000471 A is known a method of providing secure communication of information between at least a first and second digital audiovisual devices form which the second device receives a certificate comprising a transport public key encrypted by a management private key. In this method the second device decrypts the certificate using an equivalent management public key and thereafter uses the transport public key to encrypt information sent to the first device whereas the first device uses an equivalent private key to decrypt the information. The first device can assume the role of a master device whereas the second device can assume the role of a slave device. Information encrypted by the transport public key held by the second device may only be decrypted by the equivalent private key held by the first device.

In addition from the description of EP0726676 A is known a method which involves each viewer using a microprocessor card or chip card which is inserted in a decoder connected to the viewer's television set. In this method the card is used to store data relating to the user's access rights and is loaded by transmission of data over the television broadcast channel. Each viewer is provided with a master decoder and a slave decoder to be used in the same household. Management information is transmitted from the central station to the master decoder and is protected by encoding. The user must insert into the master decoder the slave card chip, and the master decoder writes access information on to this card.

The invention seeks to provide a management system which can prevent unauthorised transfer of the secondary and further decoding devices, referred to as slave decoding devices, beyond permitted and defined limits within the network.

The invention is defined by the claims.

The object of this invention is shown in implementation examples in the enclosed drawings, in which:
Fig. 1 illustrates a block scheme of system management;
Figs 2, 3, 4, and 5 illustrate block schemes of a master and slave set-top boxes interconnections;
Figs 6A and 6B illustrate a flow diagram of an algorithm of set-up process of set-top boxes;
Figs 7A and 7B illustrate a flow diagram of an algorithm of operation of a slave set-top box;
Figs 8A, 8B, 8C and 8D illustrate a flow diagram of an algorithm of operation of a master set-top box;
Figs 9A, 9B, and 9C illustrate a flow diagram of an algorithm of sending a ping message;
Fig. 10 illustrates a flow diagram of an algorithm-governed process of sending messages;
Figs 11A and 11B illustrate states of set-top boxes within the broadcast network;
Fig. 12 illustrates a system comprising set-top boxes where a method of sending messages between two set-top boxes is presented;
Fig. 13 illustrates a system comprising set-top boxes where a method of sending messages between the set-top box and an external device is presented;
Fig. 14 illustrates a structure of a message sent between set-top boxes;
Fig. 15 illustrates a flow diagram of message preparation procedure;
Fig. 16 illustrates a flow diagram of the procedure of receiving message.

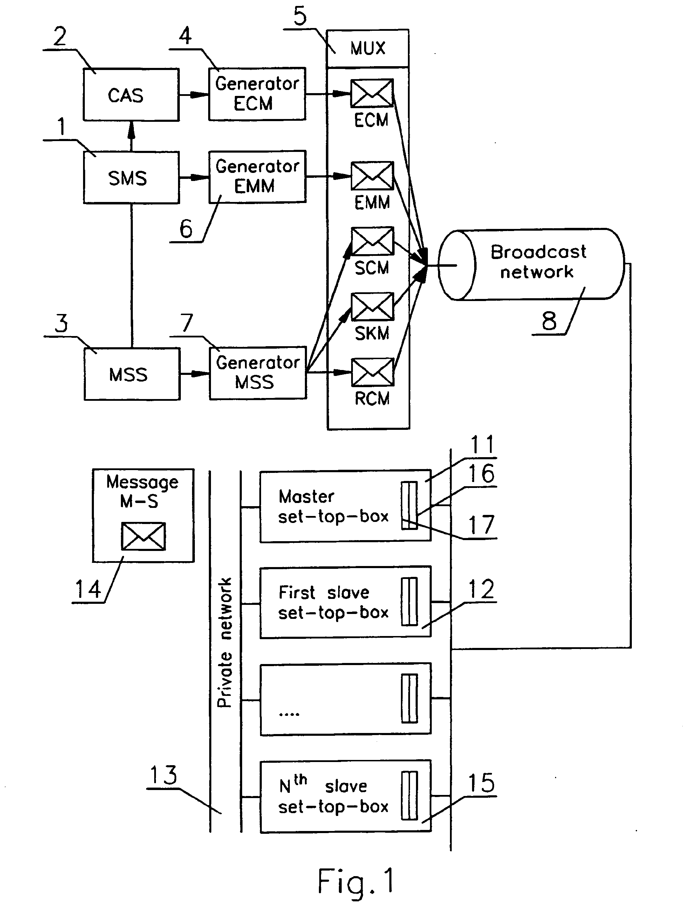

The television network system presented in fig. 1 comprises a Subscriber Management System 1, (SMS), which stores information about clients and assigned smart cards, and which is connected with a Conditional Access System 2, (CAS), and with a management system of decoders, in invention description referred to as set-top boxes or decoding devices, called a Master Slave System 3, (MSS). The Conditional Access System 2 through a generator 4 generating Entitlement Control Messages, (ECM), sends messages to a multiplexer 5 which multiplexes different data streams into one integrated stream of data. The multiplexer 5 receives also messages from a generator 6 creating Entitlement Management Messages, (EMM), messages from a generator 7 that generates set-top box management messages which are messages allowing coupling between master and slave set-top boxes, so-called Set Coupling Messages, (SCM), messages concerning the master set-top box verifying key, called Session Key Messages, (SKM), and messages used to reset the coupling of the master and the slave, called Reset Coupling Messages, (RCM).

The ECMs are messages used to decrypt the stream of data, and contain a symmetrical private key, which is used both by the transmitting and the receiving device. The ECMs are encrypted with the use of an asymmetrical key. The private part of the asymmetrical key resides in the transmitting device and the public part of the asymmetrical key is sent in the EMM. The latter contain information necessary for decoding ECMs, which means that these messages are controlling the access to the data stream. The EMMs are controlling the access to the ECMs.

The integrated stream of data from the multiplexer 5 is sent, over a broadcast network 8, to the master set-top box 11 and the slave set-top boxes 12 and 15, which are provided with a device 16 for coding and reading smart cards 17. The master set-top box 11 and the slave set-top box 12 are additionally linked through a private television network 13, within which, after the set-top boxes have been coupled, various messages 14, called Master Slave Messages, (MSM), are sent. In particular solutions, the private television network 13 can share the physical medium with the broadcast network 8. In the case of the shared medium, elements of the broadcast network 8, i.e. cables, splitters, are used, for example, to pass coupling messages for the master set-top box 11 and the slave set-top box 12.

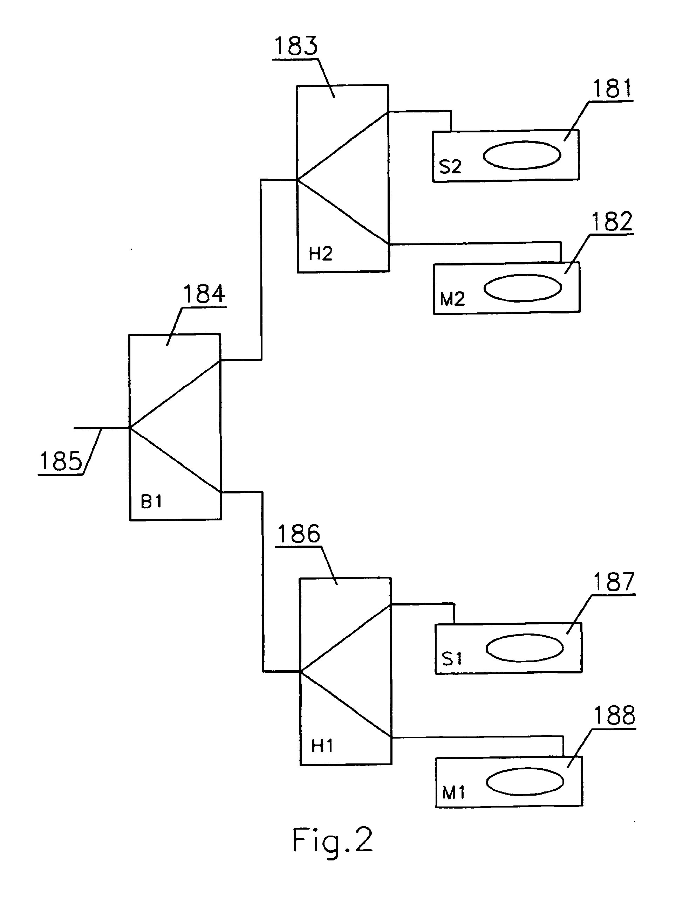

Figs 2, 3, 4, and 5 illustrate different configurations of links between the set-top boxes through the private network 13 shown in fig.1. A cable 185, shown in fig. 2, led to a building, has a two-way splitter 184 from which cables are led to the next two-way splitters 183, 186 in different apartments. In one of these, there are the master set-top box 182 and the slave set-top box 181 whilst the master set-top box 188 and the slave set-top box 187 assembly is located in the second apartment. In each apartment, set-top boxes can be placed in different rooms.

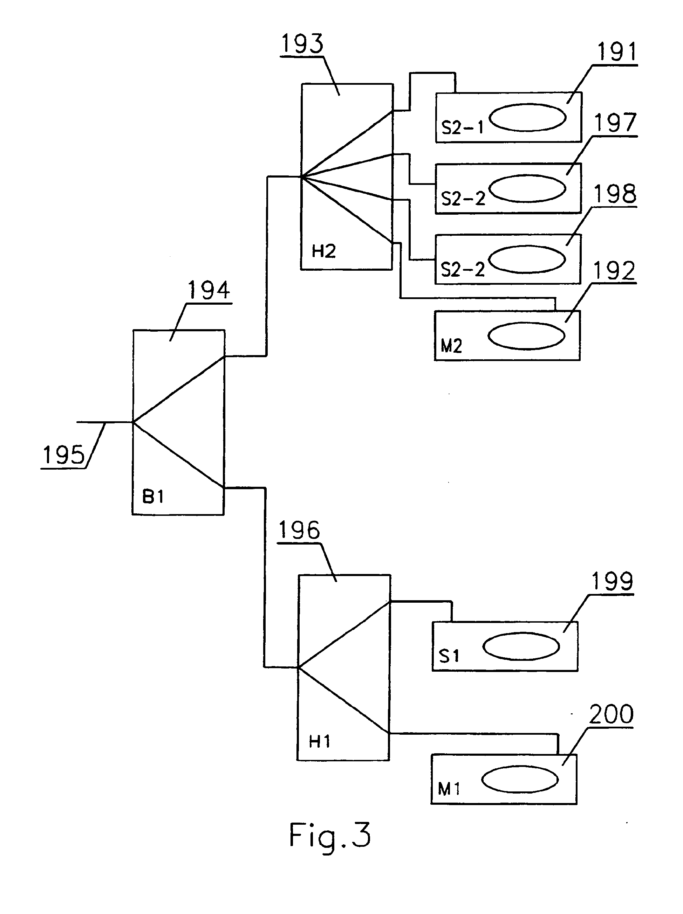

In another arrangement the cable 195, shown in fig. 3, is led to the building and is terminated with a two-way splitter 194 from which cables are led to a second two-way splitter 196 and a four-way splitter 193 located in different apartments. In one of these apartments, there are the master set-top box 192 and three slave set-top boxes 191, 197, 198, while the master set-top box 200 and one slave set-top box 199 are located in the second apartment.

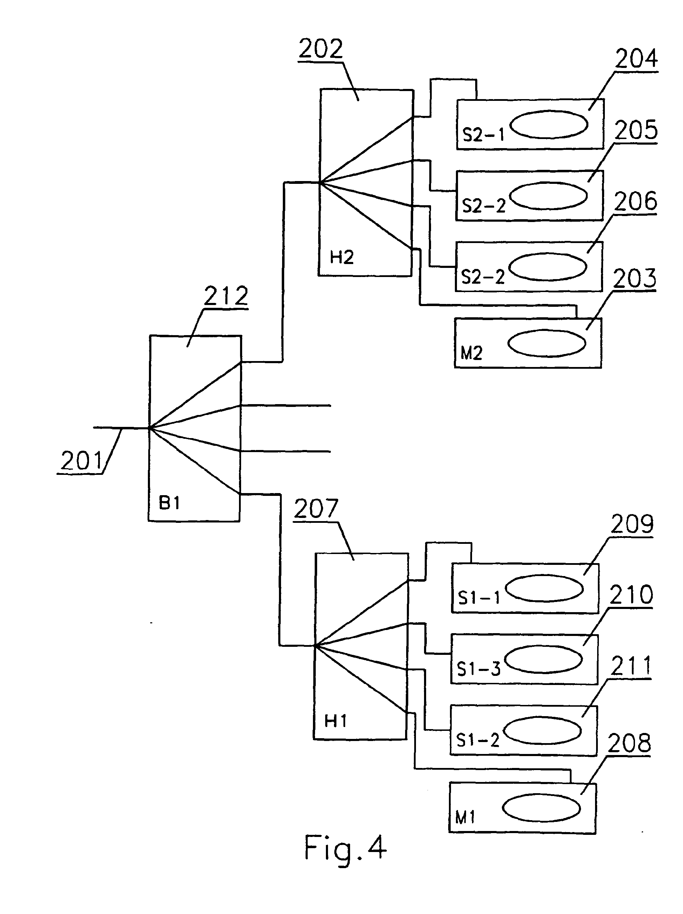

In another possible arrangement the cable 201, shown in fig. 4, is led to the building and is provided with a four-way splitter 212 from which cables are led to further four-way splitters 202, 207 located in two different apartments. In one of these apartments, there are the master set-top box 203 and three slave set-top boxes 204, 205, 206. In the second apartment the identical system is installed: the master set-top box 208 and three slave set-top boxes 209, 210, 211.

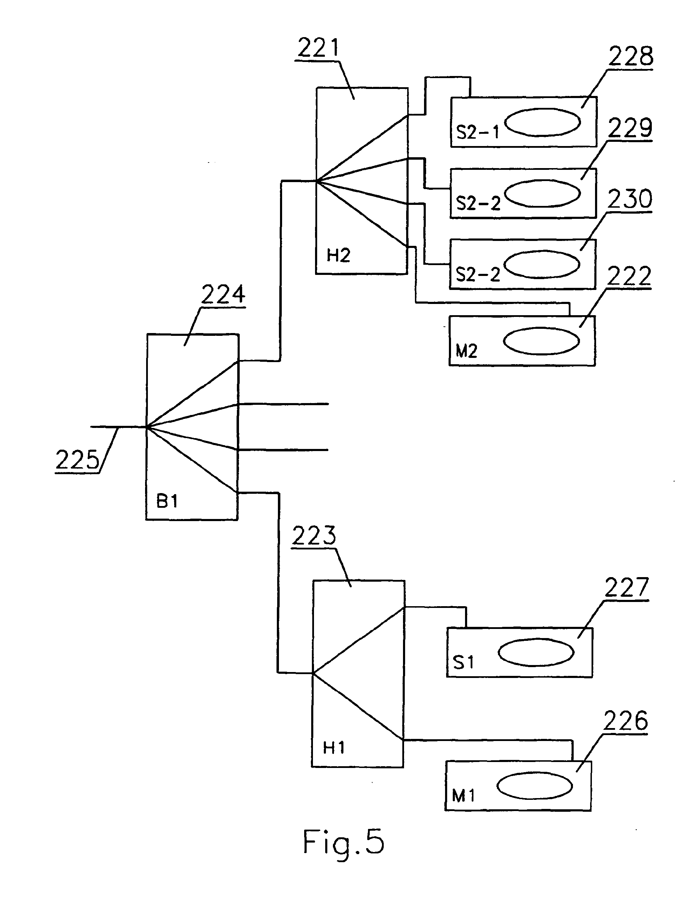

In the final layout, the cable 225, shown in fig. 5, is led to the building and has a four-way splitter 224 from which one cable is linked to a two-way splitter 223 with the master set-top box 226 and the slave set-top box 227 connected in one apartment but in two different rooms. The second cable from the splitter 224 is led to a four-way splitter 221 in a second apartment where the master set-top box 222 and three slave set-top boxes 228, 229, 230 are linked.

Each of the set-top boxes, shown in figs 2, 3, 4, and 5, operates at a specified location within the broadcast network. Each slave set-top box is interrelated with the defined master set-top box and can not change its position without modification of the settings. It means that the set-top box can not be moved beyond limits defined by a cable length, a configuration, a number and a quality of splitters between these two set-top boxes. A change of position, followed by a change of link configuration, results in changes of the signal level passing from a set-top box to a set-top box as a consequence of the modification of the connections and the change in the resistance of the cables linking the set-top boxes. To detect changes in the set-top box location in the present solution, a minimal signal level, necessary to make the connection between the master set-top box and the slave set-top box possible, depending on the location of the slave set-top box within the network, is used. This signal level is very specific for each set-top box and allows for a logical calculation of a maximum operating distance between the set-top boxes to be made. In the case of broadcast and private networks, the cable connecting the set-top boxes, as well as the electrical characteristics of the splitters, are used in the estimation of the distance between the master and the slave set-top boxes. This distance is defined as producing a minimum signal level necessary to pass a message from the master to the slave set-top box or vice-versa. The master and the slave set-top boxes memorise the minimum signal level used during the previous communication and compare it with the signal level during the next operation or while checking the stability of the configuration. If the difference in the signal level is greater than a permissible value with a certain margin, an error message will be sent, and a proper action will be taken, assuming that if the network has not been modified, the environment should not change within a short period of time. In the suggested solution, a particular set-top box should be able to modify a signal level within at least a 50 dB range in one decibel increments.

The subscriber management system, including the set-top box management system, is software operated, and specific algorithms assigned to different types of set-top boxes and functions are presented in the next figures.

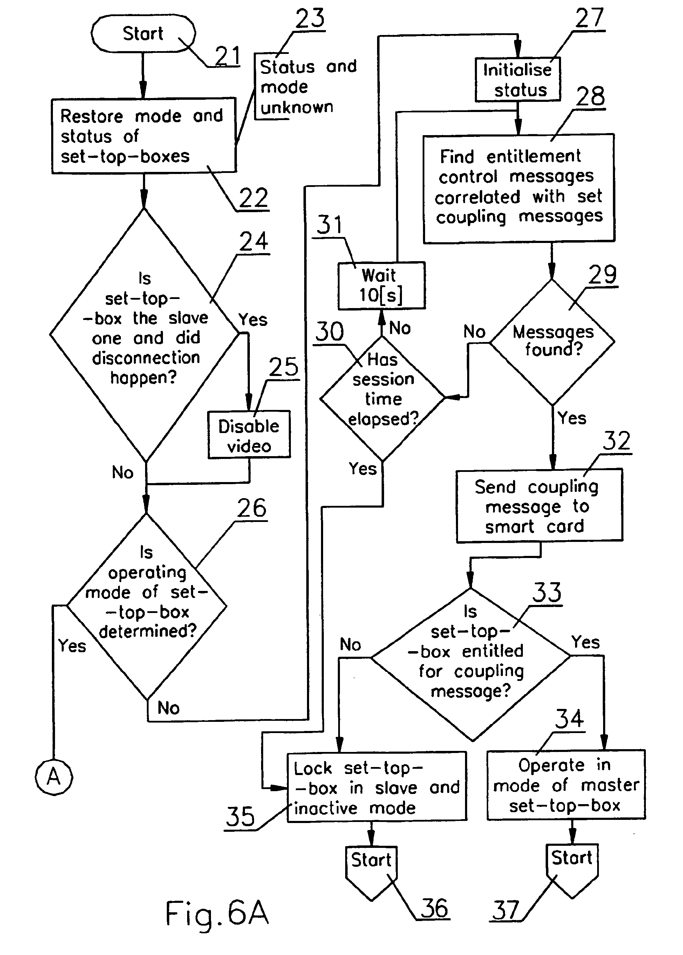

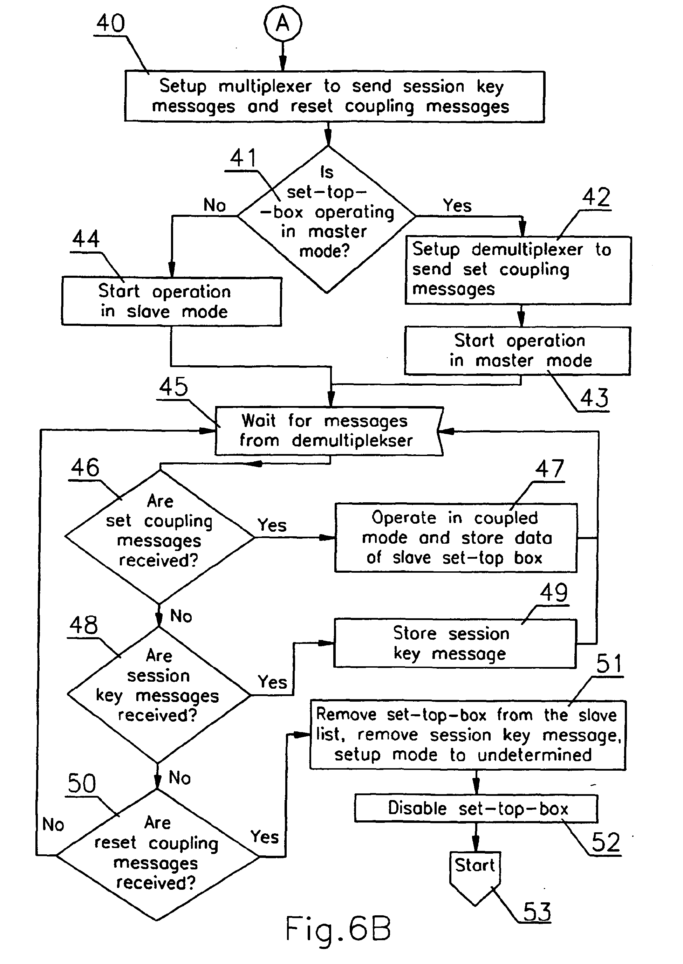

Figs 6A and 6B illustrate an algorithm of a set-up process of set-top boxes. When a set-top box starts to operate, the mode of operation and the status of the set-top box, initially unknown (the new set-top box should work in a neutral mode and then attempt to determine its role) as it is stated in table 23, are restored in step 22. Later on, in step 24, the mode of the set-top box is verified in attempt to determine its master or slave role. At the same time it is checked whether any disconnection occurred between the master and the slave set-top boxes during the last communication. In case of occurrence of such a disconnection, video display is disabled in step 25. Should the opposite case pertain, the state of the set-top box is verified in step 26, and if it is still unknown, the status of the set-top box is initialised in step 27. Then, messages relating to coupling between the master set-top box and the slave set-top box are searched for in step 28. If they are not found in step 29, and the session time has elapsed in step 30, after waiting 10 seconds in step 31, a new attempt to find the entitlement control message is performed. Once entitlement control messages and set coupling messages between the master set-top box and the slave set-top box are found, they are sent to the smart card in step 32 and next it is verified in step 33 if the set-top boxes are authorised for these coupling messages. In the case of a positive answer, the operating mode of the master set-top box is granted to the set-top box in step 34. In the case of a negative answer, in step 35, the operating mode of the slave set-top box is granted to the set-top box and the set-top box is assigned an inactive status, and in both cases the system resumes operation.

If the mode of the set-top box is recognised as known, in step 40 the demultiplexer is set to send SKMs and RCMs. When it is determined in step 41 that the set-top box operates in the master mode, in step 42 the demultiplexer is set to send SCMs and the set-top box is ordered to operate in the master mode in step 43. If the set-top box is not recognised as the master it is ordered in step 44 to work in the slave mode. Messages, obtained from the demultiplexer after waiting for a certain period in step 45, are verified in step 46. After the set coupling messages are received, the set-top boxes are coupled in step 47 and the data of the slave set-top box are stored. If SKMs were received, in step 48, the data relating to the session in progress are stored in step 49. In the case when the RCMs are received, in step 50, the set-top box is deleted from a slave set-top box list, the SKM is removed and the mode of the set-top box is set as unknown in step 51, and finally the set-top box is disabled in step 52, and the system operation is resumed.

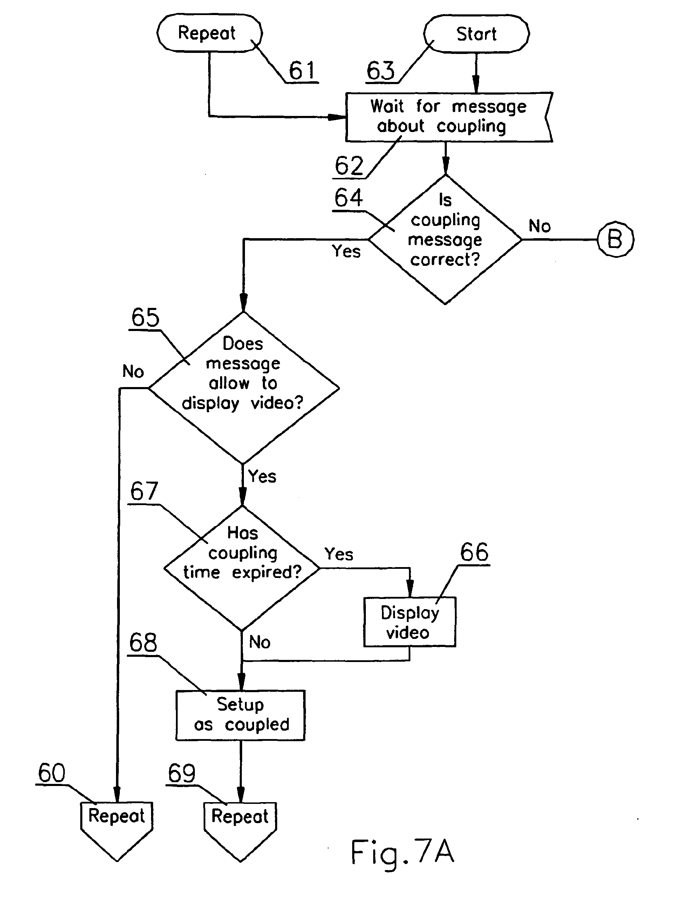

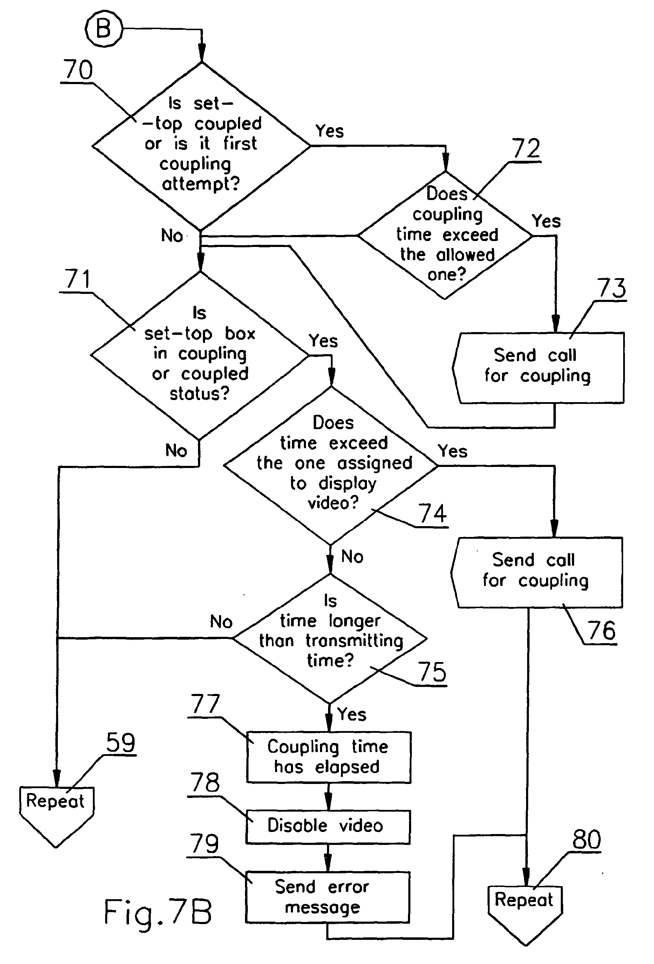

Figs. 7A and 7B illustrate an algorithm of operation of the slave set-top box, which, when turned on, waits in step 62 for a message from the master set-top box to establish coupling. A call for coupling can be repeated when a coupling order is received. If the set coupling message is positively verified in step 64, then it is further verified in step 65 to find whether this message allows video to be displayed. For the coupled slave set-top box, for which the coupling time has expired, which is checked in step 67, the video is again enabled in step 66. The non-coupled set-top box is set as the coupled one in step 68, and a repetition of the process is followed.

If the received set coupling messages are not correct, it is checked in step 70, whether the set-top box is already coupled or whether it is the first coupling. A negative answer is followed by a verification whether the set-top box is in the state of coupling or is already coupled in step 71, and if not, the coupling process is repeated. If the coupling time of the non-coupled set-top box does not exceed the time allowed for coupling, which is verified in step 72, in step 73 a message with a call for coupling is sent. The verification of the time assigned to display video takes place in step 74, and if this time has expired, in step 76, a message calling for coupling is sent. Then, in step 75 the time assigned to display video is verified, and if it has expired, in step 77 the status of the set-top box is changed to the time-expired status, followed by disabling video in step 78, next an error message is sent in step 79, and a coupling repetition takes place.

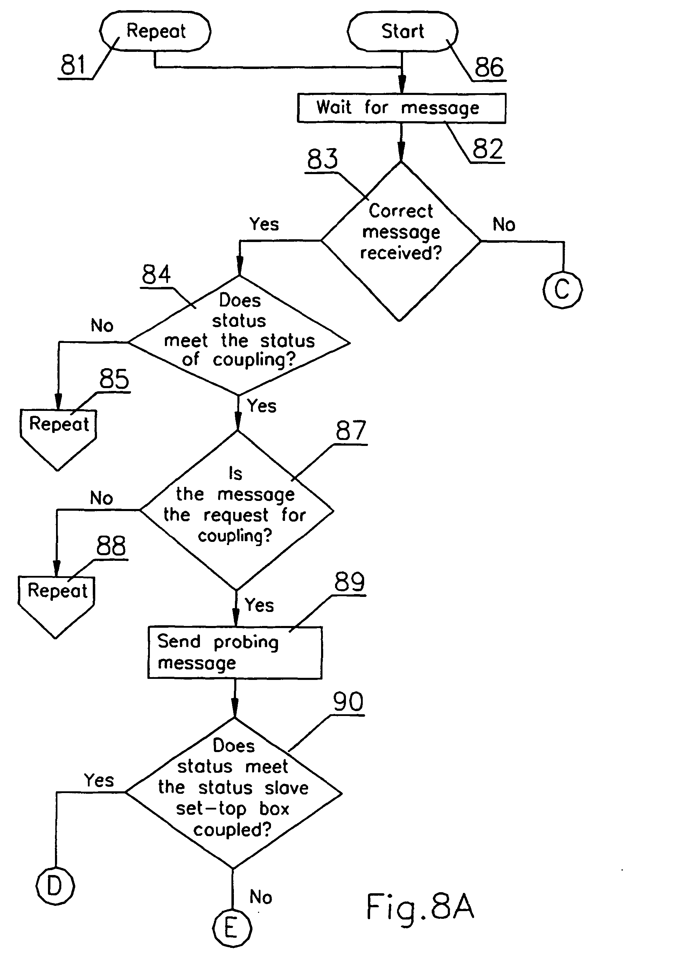

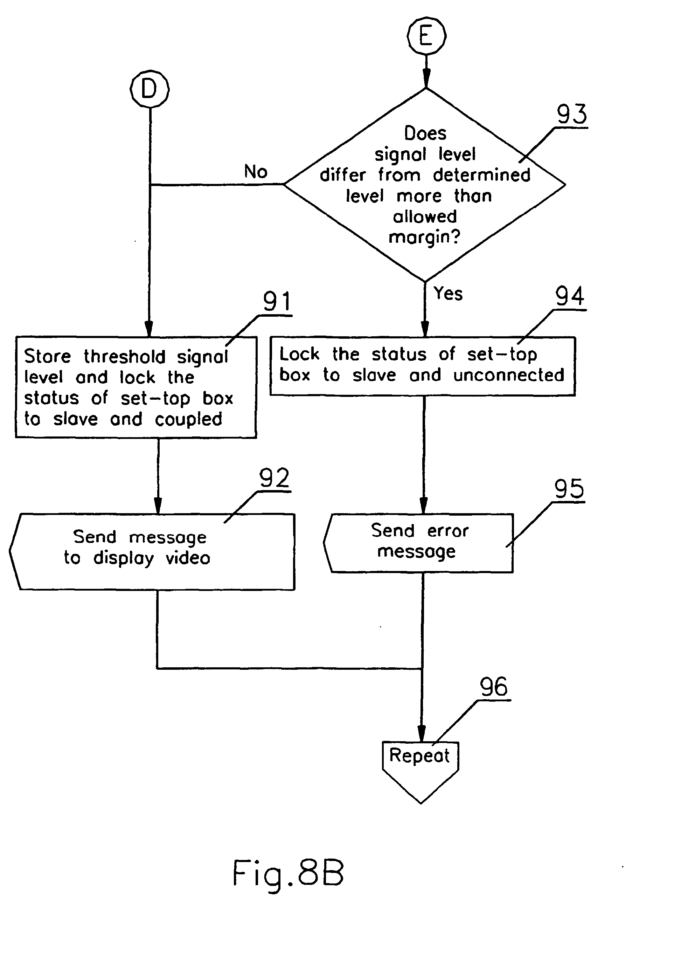

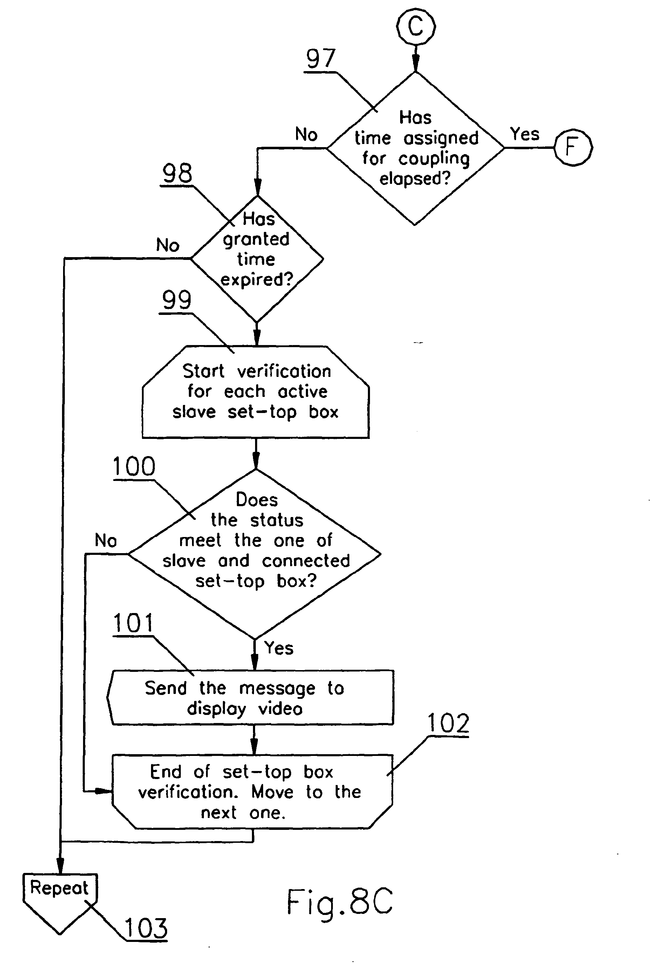

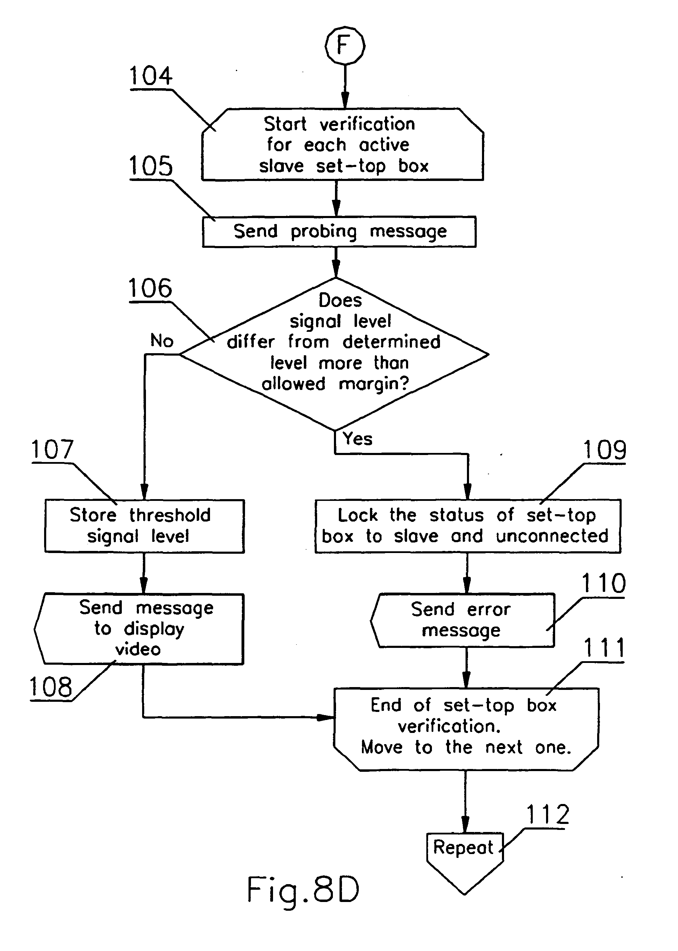

Figs 8A, 8B, 6C and 8D illustrate an algorithm of operation of the independent, or the master set-top box, which, when turned on, waits in step 82 for a message which is verified in step 83. Then, in step 84, it is checked whether the status of the master set-top box meets requirements of the coupling process. If the status of the master set-top box does not suit the coupling instruction, it returns to the waiting status. Subsequently, a check is made in step 87 as to whether the message is a request for coupling. A negative answer is followed by the return to the waiting status, whereas if the verification brings confirmation, a ping message is sent in step 89. In step 90 the status is examined, which should be the status of coupling with the slave set-top box. If so, in step 91 a threshold signal level is stored and the status of the slave set-top box coupled is allotted, followed by a message sent in step 92 to the coupled slave set-top box to enable video. The signal level is checked in step 93, and if it differs from the signal more than a permissible margin, the slave set-top box in step 94 is granted with a status of being disconnected, an error message is sent in step 95, and the master set-top box is returned to the waiting status. In step 97 a verification is carried out to decide if the time assigned for coupling has elapsed, and then in step 98 if the operating time has expired. Beginning from step 99, in steps 100, 101, and 102 the mode of each active set-top box is compared with the mode of the slave and connected set-top box, a verification process ends with a message sent to enable video display, whereas from step 103 the master set-top box is returned to the waiting status.

In case of a timeout of the master set-top box, in step 104, the verification process of each active slave set-top box is carried out, beginning with a ping message sent to the first slave set-top box in step 105, and then in step 106 a signal level is compared to a certain set level. The process of verification of the first active slave set-top box ends in step 111 and is carried starting with each next slave set-top box. If the difference in the signal level is not greater than an allowed margin, a new threshold signal level is stored in step 107, and in step 108 information to enable video display is sent. If the signal differs by more than the allowed margin, in step 109 the slave set-top box is granted with the status of non-connected, and an error message is sent in step 110.

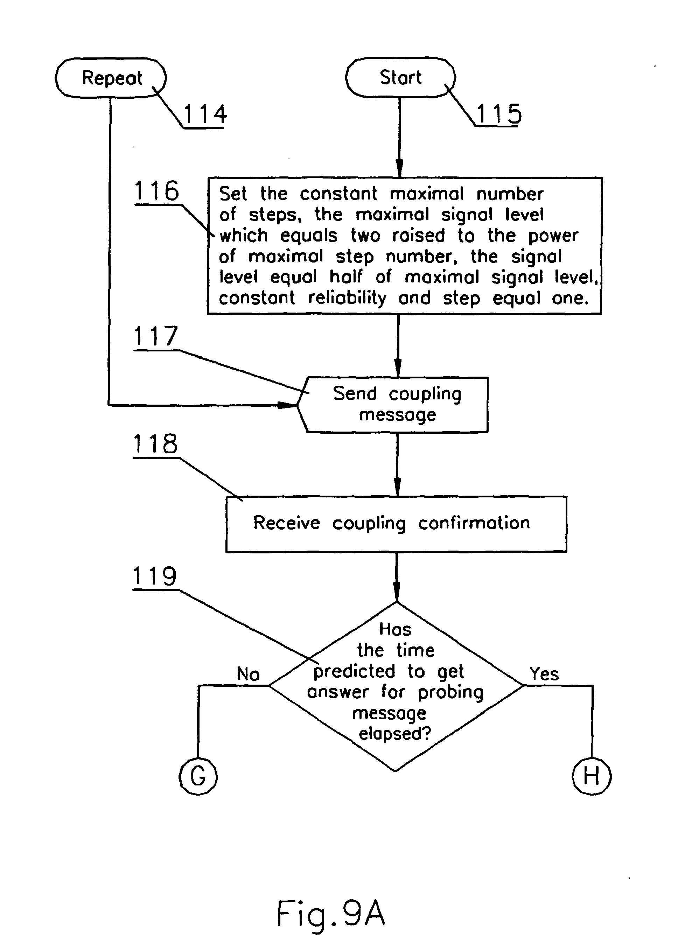

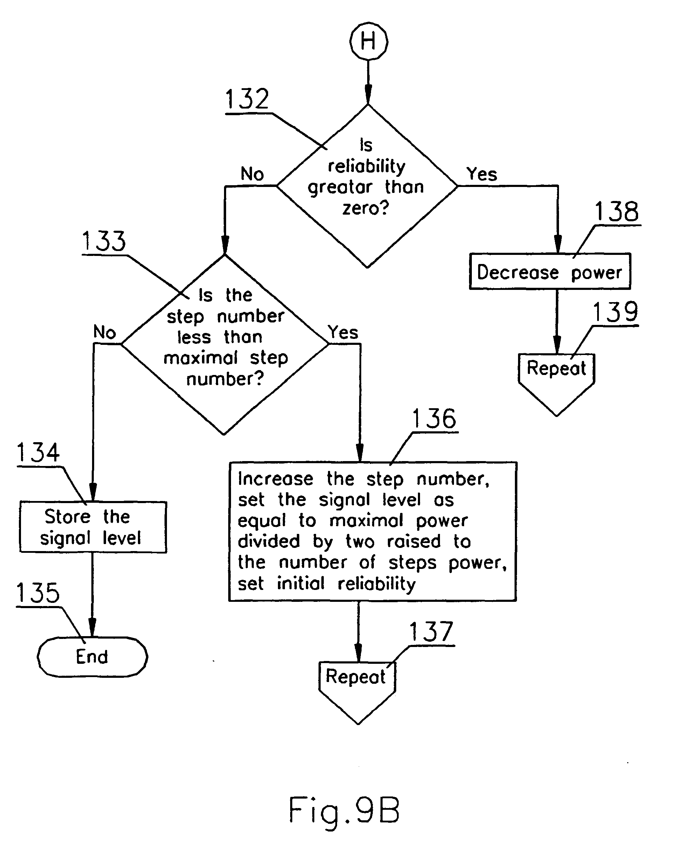

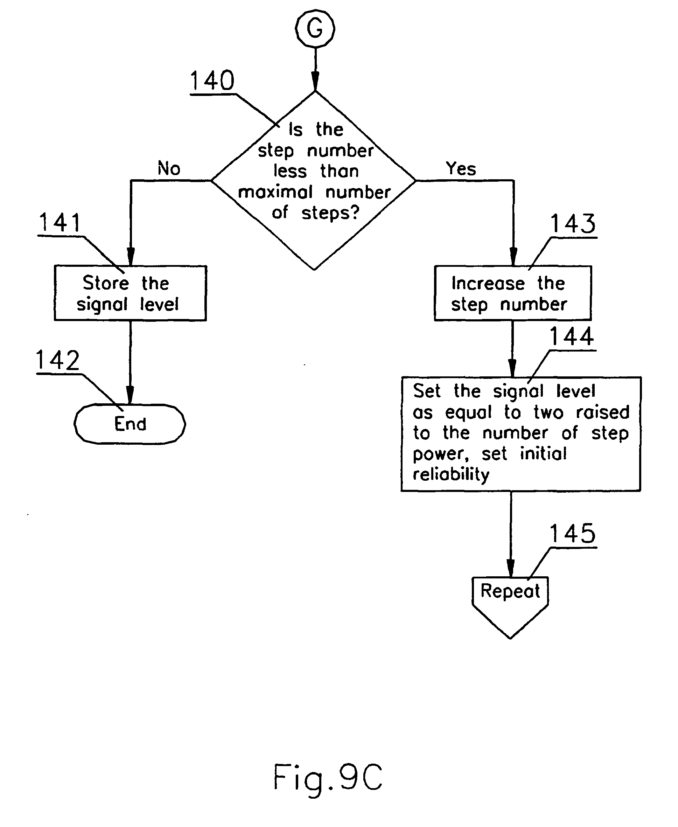

Figs 9A, 9B, and 9C illustrate an algorithm of sending a ping message to a chosen location within a network. First, in step 116 the following parameters are established: the maximum and constant number of steps, the maximum signal level which equals two raised to the power of the maximum step number, the signal power equal to half of the maximum signal power, the robustness having a constant value, and the step which equals unity. Next, a coupling message is sent in step 117 and receiving of message confirming the coupling takes place in step 118. In step 119 the time predicted to receive an answer to the ping message is verified. Calls for ping message repetitions are transmitted in step 114. If the waiting time predicted to receive confirmation of coupling is exceeded, in step 132 it is checked whether the robustness is greater than zero, and in step 133 whether the step number is less than the maximum number of steps. For a negative answer the signal power is stored in step 134 and the process of sending the ping message ends in step 135. In step 136 the step number is increased, the signal power is established as equal to the maximum power divided by two raised to the number of incremental power steps, the initial robustness is set, followed by the repetition of sending the ping message. If the number of steps is less than the maximum number of steps, which is verified in step 140, the number of steps is increased in step 143, in step 144 the signal power is established as being equal to two raised to the number of incremental power steps, the initial robustness is set, followed by the repetition of sending the ping message. The robustness, set in step 144, is a parameter used to establish the number of ping operations which take place until communication is recognised as unsuccessful. For a step number not less than the maximum step number, the signal level is recorded in step 141 and the process of sending the ping message ends in step 142.

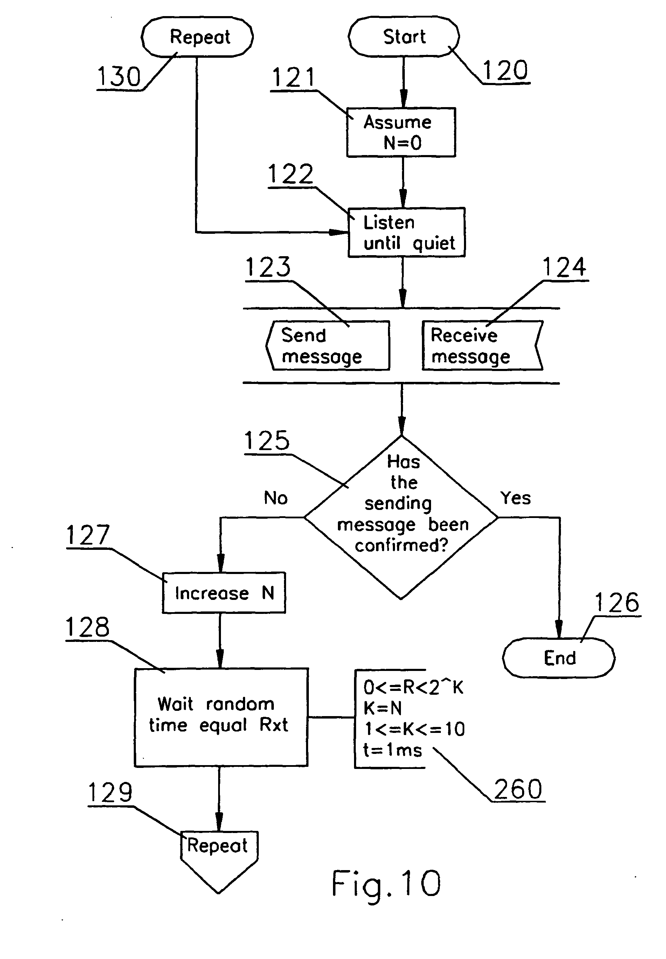

Fig. 10 illustrates an algorithm-governed process of sending messages, which after start is followed by zeroing the N number in step 121. In step 122 the set-top box waits for silence in the network. A set-top box, which does not need to transmit data, initially checks if any other set-top box has started sending messages to it. Similarly, if the set-top box has messages to transmit, it listens within the network for signals transmitted from the other set-top box, which means that the former is tuned to a carrier, and messages are sent only if no other signal is detected and the private network is idle. In step 123 a message is sent, in step 124 a message is received. In step 125 it is verified whether one of received messages is a confirmation to the message sent earlier. If there is no collision, i.e. messages sent and received are the same, the algorithm ends in step 126. In case of collision occurring (in the event of the messages not being equal), in step 127 the number N is increased followed by waiting in step 128 by a random waiting time and the process is repeated. A formula to calculate the period of waiting is described in table 129.

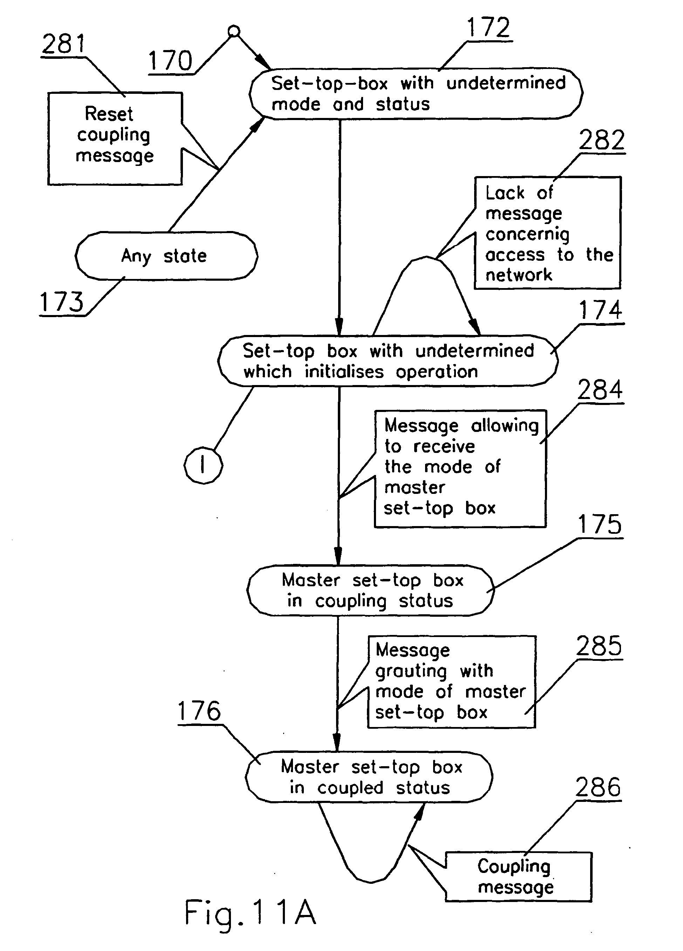

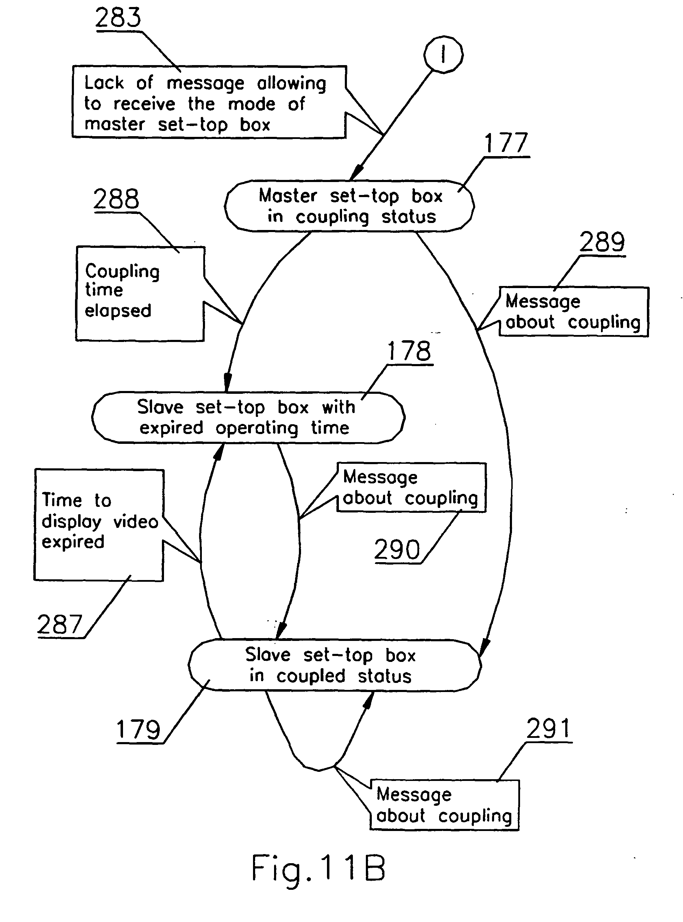

Figs. 11A and 11B illustrate states of set-top boxes within the broadcast network. At the moment of start, the mode and the status of each set-top box is not predetermined, which implies that the current mode and status are unknown. When the set-top boxes 174, 175, 176, 177, 178, 179, being in any state, receive a RCM 281, they change their state 172 to unknown. A set-top box being in unknown 172 state always sets itself into the undetermined 174 mode and initialises its operation. The set-top box operates in this state until it receives an entitlement message. If the set-top box, being in the undetermined mode, receives the message 284 assigning the mode of acting as a master, the set-top box changes its mode to the 175 master set-top box in a coupling state. When a message 285 assigning the mode of a master set-top box is received, the set-top box changes its mode 176 to that of a master set-top box in a coupled state, retaining this state as long as it is getting messages 286 about coupling. This status is changed when a reset coupling message 281 is obtained and then the set-top box changes its state 172 to undetermined mode and status.

If the set-top box 174 of undetermined mode does not receive 283 a message assigning the master mode, the set-top box changes its mode to act as the slave set-top box 177 having the coupling status. When the coupling message 289 is delivered, the set-top box changes its mode to the slave set-top box 179 with coupled status, retaining this status as long as it is receiving coupling messages 291. This state is modified if either a period of operating video expires and the set-top box is attributed the state of the timeout, or a reset coupling message 281 is delivered, resulting in a change of the set-top box 172 state to undetermined mode and status.

If the set-top box 177 in the slave mode during the coupling period 288 is not provided with the message 289 about successful coupling, it changes its mode to a slave set-top box 178 with expired operating time. The set-top box remains in this state until it receives a message 290 about coupling.

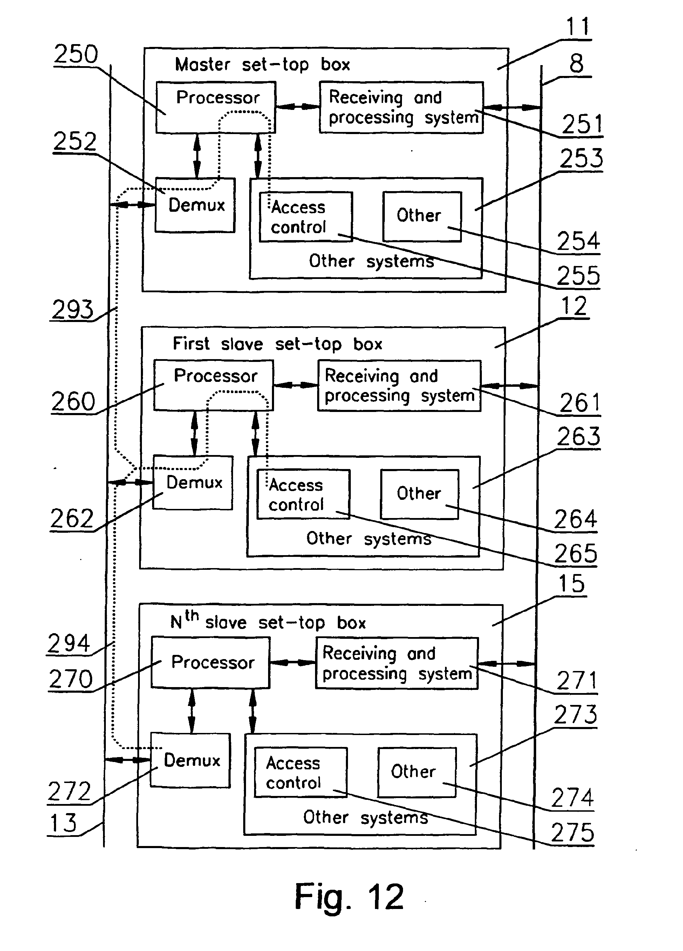

The access system to the broadcast network presented in fig. 12 comprises the master set-top box 11 and n slave set-top boxes 12, 15 linked to the master set-top box 11. The master set-top box 11 and the set-top boxes 12, 15 have four functional blocks, crucial for the system under discussion. Receiving and processing systems 251, 261, 271 are responsible for receiving a signal from the broadcast network 8. This signal is converted to digital form and is then sent for further processing. Processors 250, 260, 270 are responsible for the control of all the other systems 253, 263, 273 operating within one set-top box. For example, in fig.12, in the other systems 253, 263, 273, the systems 255, 265, 275 of access control were separated, and the other systems 254, 264, 274, which can be audio and video decoders, including those of MPEG and AC/3 format, systems generating graphics, systems generating audio and video output signals for a TV receiver, systems of memory (RAM, ROM, Flash, HDD), systems controlling external interfaces (keyboard, remote control unit), systems controlling a return channel. Processors 250, 260, 270 execute software controlling the work of these systems and also control demultiplexers 252, 262, 272 operating the private network 13 used to send various messages. The private network 13 can share physical media with the broadcast network 8 and in this case the demultiplexers 252, 262, 272 become an integral part of the receiving and processing system operating the broadcast network 8.

Fig. 12 illustrates an example of a way of message transmission between two systems of access control 255 and 265 of two different set-top boxes 11 and 12. In the situation illustrated in fig. 12, the access control system 255 of the master set-top box 11 transmits a message to the access control system 265 of the first slave set-top box 12. This message, generated by the application of the access control system 255, and then transmitted by the application of the demultiplexer 252, is transported over the private network 13. The transmitted message is received by the demultipxers 262, 272 of the remaining set-top boxes 12, 15. The first slave set-top box 12, which received the message through the route 293, accepts this message, while the n-th slave set-top box 15, which received this message through the route 294, rejects it. Next, the application of the access control system 265 of the first slave set-top box 12 begins to process the message received from the access control system 255 of the master set-top box 11.

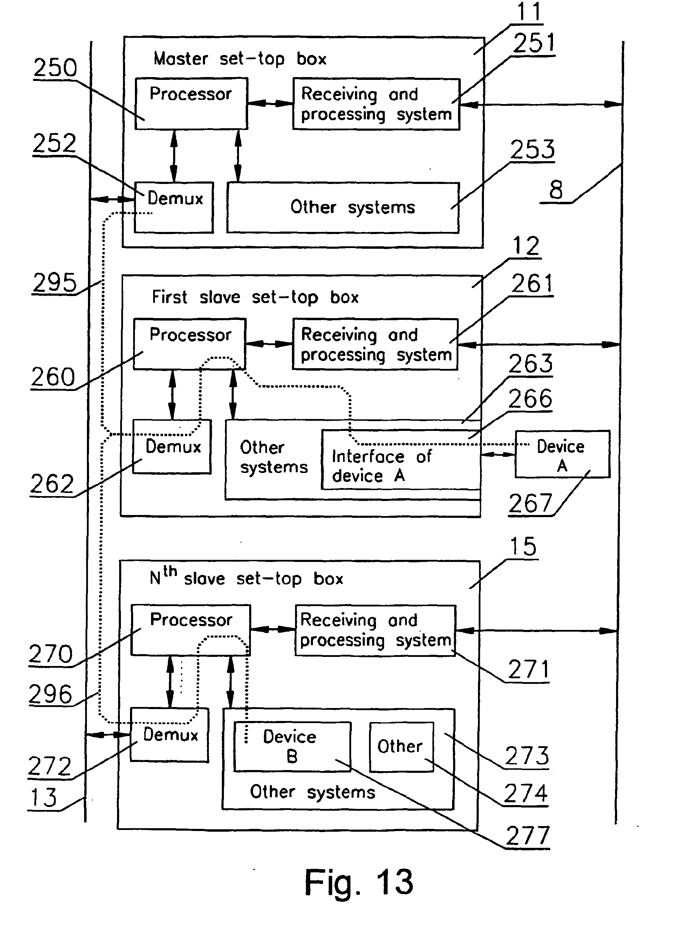

Fig. 13 presents an example of a way of message transmission between a device B 277 of the n-th slave set-top box 15 and an external device A 267 linked to the first slave set-top box 12 using an interface A 266 (for example a parallel port, an external IP network, a wireless connection i.e. Bluetooth or infra-red link, or a specific interface assigned to a given type of a device i.e. a Smart-Card interface). The device A 267 linked to the first set-top box 12 sends a message to the device B 277 which receives the message through the route 296. Simultaneously, this message is sent using the route 295 to the master set-top box 11 and is rejected because it is not dedicated to that set-top box.

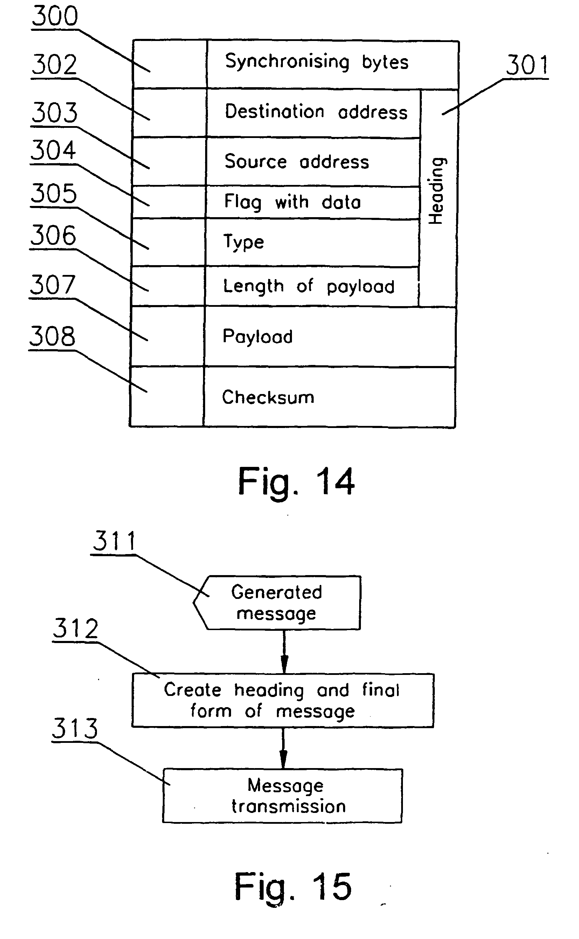

An exemplary format of a message sent between set-top boxes is presented in fig. 14. Only the field types of which the message is composed have been shown, without specifying their sizes. The precise format of a particular field can be adapted to suit a specific solution.

An exemplary message, beginning from the top, consists of synchronising bytes 300 which are used for identification of a new message. Therefore they should be unique bytes so that they will not appear in a later part of the message. For example, if the message is encoded in the Manchester system, the two bytes of values 0h8E and 0h71 respectively can serve as the synchronising bytes. This combination will not appear in the message encrypted using Manchester system and can be used as a unique characterisation of the beginning of the message.

The next part of the message is a heading 301 which consists of a field describing a destination address 302 of the message, a field describing a source address 303 of the message, a flag 304 with information whether the message contains data or not, a field 305 describing the type of the message, and a field 306 describing the length of a payload 307.

The last field is a checksum 308 which is used to detect and/or correct an error that can appear during the message transmission.

The described message can be addressed to a particular set-top box or to all set-top boxes. Information within the message can be placed in the block of data or in the block describing the type of message (messages without payload are the control and confirmation messages)

The preparation process of the message described above is presented in fig. 5 in the form of a block diagram.

The message formation starts in step 311 where the message is generated by a program, which is going to send the message. In step 312 the program creates the message, i.e. forms the heading with source and destination addresses, type and length of attached data. Next it adds data, and finally calculates the code of the checksum for the whole message. The procedure of message transmission starts in step 313.

The messages, which were sent, are delivered to the demultiplexer, which analyses the state of the private network 13 waiting to receive transmitted messages.

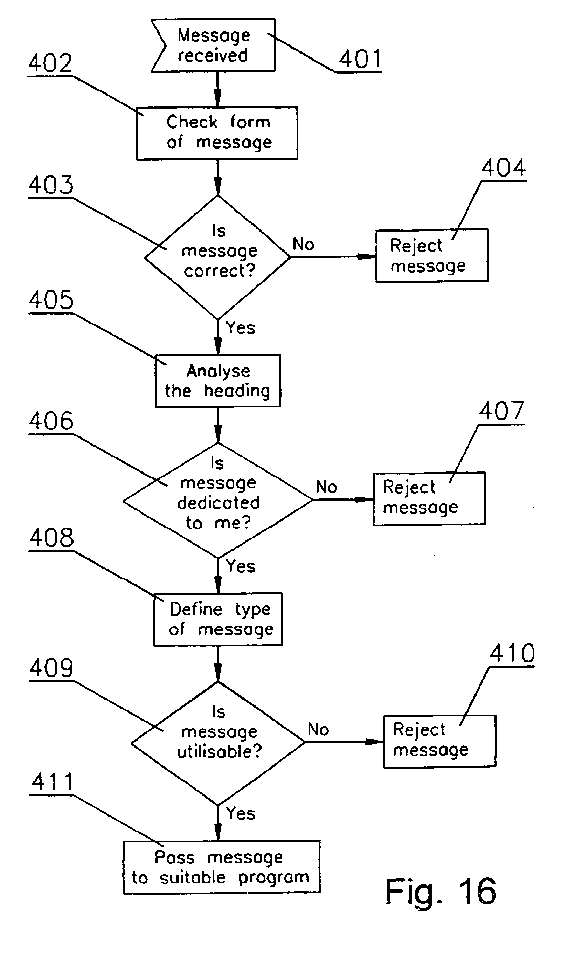

The procedure of message reception and analysis presented in fig. 16 starts in step 401 where the demultiplexer receives an incoming message. In step 402 the demultiplexer checks if the form of the delivered message is correct. The transmission error can be a result of a collision between two simultaneously sent messages. For this reason the format of message is verified and it is checked if data, at least in the heading, are not corrupt. The verification process is based on the analysis of the checksum. If in step 403 it emerges that the message is damaged, the message is rejected in step 404. If the message is in a correct form, in step 405 the heading is analysed, by reading the data concerning the destination address. It is decided in step 406 whether the message is dedicated to this particular set-top box. In case the ' message is not dedicated to this set-top box, the rejection follows in step 407. If the message is dedicated to the given set-top box it is read in step 408. Next, it is verified in step 409 if the given type of the message can be used by the set-top box. If the message has been sent to all set-top boxes, but one of them does not have a device to support the processing of this message, in step 410 the message is rejected. However, if the given type of message can be processed by the set-top box, in step 411 the message is passed to the software responsible for certain functions or operation of a particular device.

The described solution relies on the set-top box management system which generates the message coupling the master set-top box with the slave set-top box or boxes, and the security system for encrypting and decrypting data sent from the master to the slave through the private network. The management system of set-top boxes generates messages for each pair of the master and the slave set-top box as well as the code for the transmission.

The most practical and characteristic features of the solution are the identification method of master and slave set-top boxes and the coupling between each pair of set-top boxes, which are realised with the use of the number of the smart card assigned individually to each set-top box. The newly installed set-top box is operationally neutral either within specific period of time or until the message assigning its role is delivered. If no message is received within the predetermined period of time, the set-top box is disabled. Because the master set-top box has to contact the slave set-top box to activate it, the disabled slave set-top box can operate again as soon as it becomes connected to the master set-top box, which is able to identify the proximity of the slave within the broadcasting network and which is also able to use this intelligence to disable the slave set-top box that has been moved. The coupling can be reset anytime through the broadcasting network.

## Claims

1. A broadcast network access-management system comprising at least one master decoding device provided with a smart card, and at least one slave decoding device linked to the master decoding device, and a transmitter device which generates and transmits entitlement management messages intended for the master decoding device, the at least one slave decoding device and other devices **characterised in that** a level of a signal exchanged between the master decoding device (11) and the at least one slave decoding device (12) is compared with a level of a signal sent between the master decoding device and the at least one slave decoding device (12) during preceding communication and that the at least one slave decoding device (12) is allowed to operate based on comparison of the level of the signal exchanged between the master decoding device (11) and the at least one slave decoding device (12) with the level of the signal sent between the master decoding device and the at least one slave decoding device (12) during preceding communication.

2. The broadcast network access-management system, according to claim 1, **characterized in that** a decoding device is assigned the status of the master decoding device (11) only after it has been linked to a network and an entitlement control message for the master decoding device (11) has been found.

3. The broadcast network access-management system, according to claim 1, **characterized in that** the master decoding device (11) imposes on the transmitter device (3) a transmission of the entitlement control message appropriate for the master decoding device (11).

4. The broadcast network access-management system, according to claim 1, **characterized in that** a decoding device is granted with a mode of the slave decoding device (12) only after it has been linked to a network and an entitlement control message for the slave decoding device (12) has been found.

5. The broadcast network access-management system, according to claim 1, **characterized in that** the slave decoding device (12) imposes on the transmitter device (3) a transmission of the entitlement control message appropriate for the slave decoding device (12).

6. The broadcast network access-management system, according to claim 1, **characterized in that** the master decoding device (11) and the slave decoding device (12), when they are turned on, first check if any messages are being transmitted by other devices before they start to transmit messages.

7. The broadcast network access-management system, according to claim 1, **characterized in that** the slave decoding device (12) triggers the master decoding device (11) to transmit the entitlement control message appropriate for the slave decoding device (12) and messages with a demand for coupling.

8. The broadcast network access-management system, according to claim 1, **characterized in that** a period of time for coupling the master decoding device (11) with the slave decoding device (12) is pre-set.

9. The broadcast network access-management system, according to claim 1, **characterized in that** a defined distance between the master decoding device (11) and the at least one slave decoding device (12) linked to the master decoding device is determined from the level of the signal exchanged between the master decoding device (11) and the slave decoding device (12).

10. The broadcast network access-management system, according to claim 1, **characterized in that** decoding devices are assigned the status of the master decoding device (11) and the slave decoding device (12) after transmission of encoded messages by the transmitter device (3) generating and transmitting specified codes.

11. The broadcast network access-management system, according to claim 1, **characterized in that** a private television network (13) shares physical linkages with a broadcast network (3).

12. The broadcast network access-management system, according to claim 1, **characterized in that** the entitlement management messages, allowing the master decoding device (11) and at least one slave decoding device (12) an access to the broadcast network, are transmitted after the encoded messages are sent by the transmitter device (3) which is designed to generate and transmit specific codes.

13. The broadcast network access-management system, according to claim 1, **characterized in that** management messages sent to the master decoding device (11) and the slave decoding device (12) are generated by a generator (7) connected to a multiplexer (5) through another generator (6) which creates messages, and the management messages sent to the master decoding device (11) and the slave decoding device (12) are- included in the entitlement management message.

14. The broadcast network access-management system, according to claim 1, **characterized in that** messages exchanged between the master decoding device (11) and the slave decoding devices (12, 15) are messages used to identify the master decoding device (11) and the slave decoding devices (12, 15), systems that are their component parts, or external devices (267) linked to them.

15. The broadcast network access-management system, according to claim 14, **characterized in that** the messages used to identify the master decoding device (11) and the slave decoding devices (12, 15) include a type of the master decoding device (11) and the slave decoding devices (12, 15), their version and/or their serial number.

16. The broadcast network access-management system, according to claim 1, **characterized in that** messages exchanged between the master decoding device (11) and the slave decoding devices (12, 15) are messages used to identify software.

17. The broadcast network access-management system, according to claim 16, **characterized in that** the messages used to identify software include a version number and/or a serial number of the software.

18. The broadcast network access-management system, according to claim 1, **characterized in that** messages exchanged between the master decoding device (11) and the slave decoding devices (12, 15) are messages facilitating interaction between the decoding devices (11, 12, 15), systems integral to them, or between software installed in the decoding devices (11, 12, 15) or devices co-operating with them.

19. The broadcast network access-management system, according to claim 1, **characterized in that** messages exchanged between the master decoding device (11) and the slave decoding devices (12, 15) are messages which incorporate an operating status of a given device/program, a result of a certain operation, an order to execute a certain operation and data collected or processed by a certain device/software.

20. The broadcast network access-management system, according to claim 1, **characterized in that** messages exchanged between the master decoding device (11) and the slave decoding devices (12, 15) are messages generated either within the decoding devices (11, 12, 15) or delivered from external sources.

21. The broadcast network access-management system, according to claim 1, **characterized in that** messages exchanged between the master decoding device (11) and the slave decoding devices (12, 15) are internet data, text messages, streams and files containing sound, pictures, video and software, and/or updates of software.

22. The broadcast network access-management system, according to claim 1, **characterized in that** messages exchanged between the master decoding device (11) and the slave decoding devices (12, 15) contain additional messages generated by software installed in the decoding device or devices which are co-operating with them, or the messages which are delivered to the decoding devices from outside sources.

23. The broadcast network access-management system, according to claim 1, **characterized in that** messages exchanged between the master decoding device (11), the slave decoding devices (12), and outside devices consist of synchronising bytes (300), a heading (301) with a source and a destination addresses (302, 303), a type (305) of message, a flag (304) with information as to whether the message contains data and the message (306) determining the size of the block of data, and also data (307) constituting the message (referred to as a payload), and a checksum (308).

24. A method for management of signal receivers provided with smart cards and linked to a television broadcast network, among which at least one device is a master decoding device linked to at least one slave decoding device and an interlinked transmitter device which generates and transmits messages that allow to use the master decoding device, the at least one decoding device and receivers connected to them, the method for management of signal receivers comprising the following steps:
linking the master decoding device (11) and at least one slave decoding device (12) through a connection;
checking a level of a signal exchanged between the master decoding device (11) and the at least one slave decoding device (12) for changes occurred;
comparing the level of the signal exchanged between the master decoding device (11) and the at least one slave decoding device (12) with a level of a signal sent between the master deciding device (11) and the at least one slave decoding device (12) during preceding communication; and
allowing the slave decoding device (12) to operate based on comparison of the level of the signal exchanged between the master decoding device (11) and the at least one slave decoding device (12) with the level of the signal sent between the master decoding device and the at least one slave decoding device (12) during preceding communication.

25. The method, according to claim 24, **characterized in that** a decoding device is assigned the status of the master decoding device (11) only after it has been linked to a network and an entitlement control message for the master decoding device (11) has been found.

26. The method, according to claim 24, **characterized in that** the master decoding device (11) imposes on the transmitter device a transmission of the entitlement control message appropriate for the master decoding device (11).

27. The method, according to claim 24, **characterized in that** a decoding device is granted with a mode of the slave decoding device (12) only after it has been linked to a network and an entitlement control message for the slave decoding device (12) has been found.

28. The method, according to claim 24, **characterized in that** the slave decoding device (12) imposes on the transmitter device a transmission of the entitlement control message appropriate for the slave decoding device (12).

29. The method, according to claim 24, **characterized in that** the master decoding device (11) and the slave decoding device (12), when they are turned on, first check if any messages are being transmitted by other devices before they start to transmit messages.

30. The management method, according to claim 24, **characterized in that** the slave decoding device (12) triggers the master decoding device (11) to transmit the entitlement control message appropriate for the slave decoding device (12) and messages with a demand for coupling.

31. The method, according to claim 24, **characterized in that** a period of time for coupling the master decoding device (11) with the slave decoding device (12) is pre-set.

32. The method, according to claim 24, **characterized in that** a defined distance between the master decoding device (11) and the at least one slave decoding device (12) linked to the master decoding device is determined from the level of the signal exchanged between the master decoding device (11) and the slave decoding device (12).

33. The method, according to claim 24, **characterized in that** decoding devices are assigned the status of the master decoding device (11) and the slave decoding device (12) after transmission of encoded messages by the transmitter device (3) generating and transmitting specified codes.

34. The method, according to claim 24, **characterized in that** a private television network (13) shares physical linkages with a broadcast network (8).

35. The method, according to claim 24, **characterized in that** the entitlement management messages, allowing the master decoding device (11) and at least one slave decoding device (12) an access to the broadcast network, are transmitted after the encoded messages are sent by the transmitter device (3) which is designed to generate and transmit specific codes.

36. The method, according to claim 24, **characterized in that** management messages sent to the master decoding device (11) and the slave decoding devices (12) are generated by a generator (7) connected to a multiplexer (5) through another generator (6) which creates messages, and the management messages sent to the master (11) and the slave decoding devices (12) are included in the entitlement management message.

37. The method, according to claim 24, **characterized in that** messages exchanged between the master decoding device (11) and the slave decoding devices (12, 15) are messages used to identify the master decoding device (11) and the slave decoding devices (12, 15), systems that are their component parts, or external devices (267) linked to them.

38. The method, according to claim 37, **characterized in that** the messages used to identify the master decoding device (11) and the slave decoding devices (12, 15), include a type of the master decoding device (11) and the slave decoding devices (12, 15), their version and/or their serial number.

39. The method, according to claim 24, **characterized in that** messages exchanged between the master decoding device (11) and the slave decoding devices (12, 15) are messages used to identify software.

40. The broadcast network access-management system, according to claim 9, **characterized in that** the master decoding device (11) and the at least one slave decoding device (12) operate when a distance between the master decoding device (11) and the at least one slave decoding device (12) does not exceed the defined distance dependant upon a cable length, a configuration, a number and a quality of splitters and connections.

## Patentansprüche

1. Ein Rundfunknetzwerkzugangsverwaltungssystem bestehend mindestens aus einer Hauptdecodierungseinrichtung ausgestattet mit einer Chipkarte und mindestens einer mit der Hauptdecodierungseinrichtung verbundenen Unterordnungsdecodierungseinrichtung, und Übermittlungseinrichtung, welche die Anspruchskontrollnachrichten, geplant für die Hauptdecodierungseinrichtung, mindestens für eine Unterordnungsdecodierungseinrichtung und für andere Einrichtungen, erzeugt und überträgt, **dadurch gekennzeichnet, dass** eine Signalniveauebene zwischen der Hauptdecodierungseinrichtung (11) und mindestens einer Unterordnungsdecodierungseinrichtung (12) ausgetauscht und verglichen wird mit der Signalniveauebene, welche zwischen der Hauptdecodierungseinrichtung und mindestens der Unterordnungsdecodierungseinrichtung während der einleitenden Verständigung, und dass mindestens einer Unterordnungsdecodierungseinrichtung erlaubt ist, basierend auf dem Vergleich der Signalniveauebene des gesendeten Signals, ausgetauscht zwischen der Hauptdecodierungseinrichtung (11) und mindestens einer Unterordnungsdecodierungseinrichtung (12) mit der Signalniveauebene, welche zwischen der Hauptdecodierungseinrichtung und mindestens der Unterordnungsdecodierungseinrichtung während der einleitenden Verständigung, zu operieren.

2. Das Rundfunknetzwerkzugangsverwaltungssystem nach Anspruch 1 **dadurch gekennzeichnet, dass** einer Decodierungseinrichtung dem Status der Hauptdecodierungseinrichtung (11) nur zuteilt ist, wenn sie mit einem Netzwerk verbunden wurde und eine Anspruchskontrollnachricht für die Hauptdecodierungseinrichtung (11) gefunden wurde.

3. Das Rundfunknetzwerkzugangsverwaltungssystem nach Anspruch 1 **dadurch gekennzeichnet, dass** die Hauptdecodierungseinrichtung (11) bei der Sendevorrichtung (3) eine Sendung einer für die Anspruchskontrollnachricht geeignete Hauptdecodierungseinrichtung (11) verlangt.

4. Das Rundfunknetzwerkzugangsverwaltungssystem nach Anspruch 1 **dadurch gekennzeichnet, dass** eine Decodierungseinrichtung einem Modus der Unterordnungsdecodierungseinrichtung (12) nur zuteilt ist, wenn sie mit einem Netzwerk verbunden wurde und eine Anspruchskontrollnachricht für die Unterordnungsdecodierungseinrichtung (12) gefunden wurde.

5. Das Rundfunknetzwerkzugangsverwaltungssystem nach Anspruch 1 **dadurch gekennzeichnet, dass** die Unterordnungsdecodierungseinrichtung (12) die Sendevorrichtung (3) mit einer Übermittlung der Anspruchskontrollnachricht, geeignet für die Untergeordnetdecodierungseinrichtung (12), belegt.

6. Das Rundfunknetzwerkzugangsverwaltungssystem, nach Anspruch 1 **dadurch gekennzeichnet, dass** die Hauptdecodierungseinrichtung (11) und die Unterordnungsdecodierungseinrichtung (12), wenn sie eingeschaltet sind, zuerst überprüfen, ob irgendwelche Nachrichten von anderen Einrichtungen übertragen wurden, bevor sie beginnen, Nachrichten zu senden.

7. Das Rundfunknetzwerkzugangsverwaltungssystem, nach Anspruch 1 **dadurch gekennzeichnet, dass** die Unterordnungsdecodierungseinrichtung (12) bei der Hauptdecodierungseinrichtung (11) die Anspruchskontrollnachricht , geeignet für die Untergeordnetdecodierungseinrichtung (12) und Nachrichten mit Verbindungsaufforderung zu übertragen, auslöst.

8. Das Rundfunknetzwerkzugangsverwaltungssystem, nach Anspruch 1 **dadurch gekennzeichnet, dass** ein Zeitabschnitt für die Verbindung der Hauptdecodierungseinrichtung (11) mit der Unterordnungsdecodierungseinrichtung (12) vorangesetzt ist.

9. Das Rundfunknetzwerkzugangsverwaltungssystem, nach Anspruch 1 **dadurch gekennzeichnet, dass** ein bestimmter Abstand zwischen der Hauptdecodierungseinrichtung (11) und mindestens der Unterordnungsdecodierungseinrichtung (12), verbunden mit der Hauptdecodierungseinrichtung von dem Niveau des Signales, welches zwischen der Hauptdecodierungseinrichtung (11) und der Unterordnungsdecodierungseinrichtung ausgetauscht wird, entschieden wird.

10. Das Rundfunknetzwerkzugangsverwaltungssystem, nach Anspruch 1 **dadurch gekennzeichnet, dass** den Decodierungseinrichtungen dem Status der Hauptdecodierungseinrichtung (11) und der Unterordnungsdecodierungseinrichtung (12) nach Übermittlung von verschlüsselten Nachrichten von der Sendevorrichtung (3) zugeteilt werden, erzeugend und übermittelnd besonderer Codes.

11. Das Rundfunknetzwerkzugangsverwaltungssystem, nach Anspruch 1 **dadurch gekennzeichnet, dass** ein privates Fernsehnetzwerk (13) Anteil an physischen Programmverbindungen mit einem Nachrichtennetzwerk (3) hat.

12. Das Rundfunknetzwerkzugangsverwaltungssystem nach Anspruch 1 **dadurch gekennzeichnet, dass** die Anspruchskontrollnachrichten, der Hauptdecodierungseinrichtung (11) und mindestens einer Unterordnungsdecodierungseinrichtung (12) einen Zugang zu einem Nachrichtennetzwerk gestattend, übertragen werden, nachdem die verschlüsselten Nachrichten durch die Sendevorrichtung (3), welche entworfen wurde, spezielle Codes zu erzeugen und zu übertragen, gesendet wurde.

13. Das Rundfunknetzwerkzugangsverwaltungssystem nach Anspruch 1 **dadurch gekennzeichnet, dass** die Managementnachrichten, die zu der Hauptdecodierungseinrichtung (11) und der Unterordnungsdecodierungseinrichtung (12) gesendet werden, durch einen Generator (7) generiert sind, der mit einem Mehrfachschaltungsbetreiber (5) und mit anderem Generator (6), welcher Nachrichten hervorbringt, verbunden ist, und die Managementnachrichten, die zu der Hauptdecodierungseinrichtung (11) und der Unterordnungsdecodierungseinrichtung (12) sendet werden, Anspruchskontrollnachrichten enthalten.

14. Das Rundfunknetzwerkzugangsverwaltungssystem nach Anspruch 1 **dadurch gekennzeichnet, dass** Nachrichten, die zwischen der Hauptdecodierungseinrichtung (11) und der Unterordnungsdecodierungseinrichtung (12) ausgetauscht werden, sind die Nachrichten, die gebraucht werden um die Hauptdecodierungseinrichtung (11), die Unterordnungsdecodierungseinrichtungen (12, 15) als auch Systeme, die als ihre einzelnen Komponententeilen oder äußeren mit ihnen verbundenden Einrichtungen (267) sind, zu identifizieren.

15. Das Rundfunknetzwerkzugangsverwaltungssystem nach Anspruch 1 **dadurch gekennzeichnet, dass** die Nachrichten, die benötigt werden, die Hauptdecodierungseinrichtung (11) und die Unterordnungsdecodierungseinrichtungen (12, 15), um einen Typ einer Hauptdecodierungseinrichtung (11) und Untergeordnetdecodierungseinrichtungen (12, 15), ihrer Version und/oder Seriennummer, einschließen und zu identifizieren

16. Das Rundfunknetzwerkzugangsverwaltungssystem nach Anspruch 1 **dadurch gekennzeichnet, dass** Nachrichten, die zwischen der Hauptdecodierungseinrichtung (11) und den Unterordnungsdecodierungseinrichtungen (12, 15) ausgetauscht werden, sind die Nachrichten, die benötigt werden, die Software zu identifizieren.

17. Das Rundfunknetzwerkzugangsverwaltungssystem nach Anspruch 16 **dadurch gekennzeichnet, dass** die Nachrichten, die für die Identifizierung der Software benötigt werden, Versionsnummer und/oder eine Seriennummer der Software beinhalten.

18. Das Rundfunknetzwerkzugangsverwaltungssystem nach Anspruch 1 **dadurch gekennzeichnet, dass** Nachrichten, die zwischen der Hauptdecodierungseinrichtung (11) und den Unterordnungsdecodierungseinrichtungen (12, 15) ausgetauscht werden, sind die Nachrichten, die eine Wechselwirkung zwischen den Decodierungseinrichtungen (11, 12, 15), den eingegliederten Systemen zu ihnen, oder zwischen der Software, die in den Decodierungseinrichtungen (11, 12, 15), oder Einrichtungen, die mit ihnen zusammenarbeiten, erleichtern.

19. Das Rundfunknetzwerkzugangsverwaltungssystem nach Anspruch 1 **dadurch gekennzeichnet, dass** Nachrichten, die zwischen der Hauptdecodierungseinrichtung (11) und der Unterordnungsdecodierungseinrichtungen (12, 15) ausgetauscht werden, sind die einen Arbeitsstatus der spezifischen Einrichtung/Programme, ein Ergebnis einer spezifischen Operation, einen Auftrag einer Operation durchzuführen, als auch Data sammeln oder bearbeiten bei einer spezifischen Einrichtung/Software enthaltene Nachrichten.

20. Das Rundfunknetzwerkverwaltungszugangssystem nach Anspruch 1 **dadurch gekennzeichnet, dass** Nachrichten, die zwischen der Hauptdecodierungseinrichtung (11) und der Unterordnungsdecodierungseinrichtung (12) ausgetauscht werden, sind die Nachrichten, die entweder innerhalb der Decodierungseinrichtungen (11, 12, 15) erzeugt wurden, oder von äußeren Quellen geliefert werden.

21. Das Rundfunknetzwerkzugangsverwaltungssystem nach Anspruch 1 **dadurch gekennzeichnet, dass** Nachrichten, die zwischen der Hauptdecodierungseinrichtung (11) und den Unterordnungsdecodierungseinrichtung (12, 15) ausgetauscht werden, sind Internet-Daten mit Textnachrichten, Strömen und Internet-Dokumentenordnern, die Töne, Bilder, Videos und Software, und/oder Aktualisierungen der Software enthalten.

22. Das Rundfunknetzwerkzugangsverwaltungssystem nach Anspruch 1 **dadurch gekennzeichnet, dass** Nachrichten, die zwischen der Hauptdecodierungseinrichtung (11) und den Unterordnungsdecodierungseinrichtungen (12, 15) ausgetauscht werden, enthalten zusätzliche Nachrichten, die durch Software erzeugt worden sind, die in den Decodierungseinrichtungen oder Einrichtungen gespeichert sind, die mit ihnen zusammenarbeiten und verbunden sind, oder Nachrichten, welche zu den Decodierungseinrichtungen von äußeren Quellen geliefert wurden.

23. Das Rundfunknetzwerkzugangsverwaltungssystem nach Anspruch 1 **dadurch gekennzeichnet, dass** Nachrichten, die zwischen der Hauptdecodierungseinrichtung (11) und der Unterordnungsdecodierungseinrichtungen (12) und den äußeren Einrichtungen ausgetauscht werden, bestehen aus zeitlich aufeinander folgenden Bytes (300), und einem Kopfstück (301) mit Quellen und Bestimmungsadressen (302, 303), einem Nachrichtenmuster (305), einer Markierung (304) mit Informationen zu welcher die Nachricht Daten enthält und die Nachricht (306), den Datengrößenblock bestimmend und auch Daten (307), die Nachricht bezüglich ihrer Nutzlast/Ladefähigkeit und einer Kontrollsumme (308) einsetzend.

24. Eine Verwaltungsmethode von Signalempfängern in einem Rundfunknetzwerkzugangsverwaltungssystem ausgerüstet mit Chipkarten und verbunden zu einem Fernsehnachrichtennetzwerk, zwischen den mindestens eine Einrichtung eine Hauptdecodierungseinrichtung ist, verbunden mindestens mit einer Unterordnungsdecodierungseinrichtung und einer vernetzten Sendevorrichtung, welche Nachrichten erzeugt und sendet, die es ermöglichen die Hauptdecodierungseinrichtung, mindestens eine Unterordnungsdecodierungseinrichtung und zu denen verbundene Empfänger zu nutzen, wobei die Methode zum Verwalten von Signalempfängern aus folgenden Schritten besteht:
Verbindung einer Hauptdecodierungseinrichtung (11) und mindestens einer Unterordnungsdecodierungseinrichtung (12) bei einem Bindeglied;
Überprüfung eines Signalniveaus, ausgetauscht zwischen der Hauptdecodierungseinrichtung (11) und mindestens einer Unterordnungsdecodierungseinrichtung (12) vorkommend für Änderungen;
Vergleichung des Signalniveau, welches zwischen der Hauptdecodierungseinrichtung (11) und mindestens einer Unterordnungsdecodierungseinrichtung (12) ausgetauscht wird, mit einem Signalniveau, gesendet zwischen der Hauptdecodierungseinrichtung (11) und mindestens einer Unterordnungsdecodierungseinrichtung (12) während der vorangehenden Mitteilung; und dem
Erlauben der Unterordnungsdecodierungseinrichtung auf dem Vergleich des Signalniveauaustausches zwischen der Hauptdecodierungseinrichtung (11) und mindestens einer Unterordnungsdecodierungseinrichtung (12) mit dem Signalniveau, gesendet zwischen der Hauptdecodierungseinrichtung (11) und mindestens einer Unterordnungsdecodierungseinrichtung (12) während der vorangehenden Mitteilung, zuzuarbeiten.

25. Die Methode nach Anspruch 24 **dadurch gekennzeichnet, dass** eine Decodierungseinrichtung für den Status der Hauptdecodierungseinrichtung (11) zugeteilt wird, nachdem diese mit einem Netzwerk verbunden wurde und eine Anspruchskontrollnachricht für die Hauptdecodierungseinrichtung (11) gefunden wurde.

26. Die Methode nach Anspruch 24 **dadurch gekennzeichnet, dass** eine Hauptdecodierungseinrichtung (11) mit der Übertragungseinrichtung zur Übermittlung von Anspruchs-Kontrollnachrichten, geeignet für die Hauptdecodierungseinrichtung, belegt ist.

27. Die Methode nach Anspruch 24 **dadurch gekennzeichnet, dass** eine Decodierungseinrichtung mit einem Modus der Unterordnungsdecodierungseinrichtung (12) nur nach seiner Verbindung zu einem Netzwerk und einer Anspruchskontrollnachricht für die Unterordnungsdecodierungseinrichtung (12) gefunden wurde, gewährt wird.

28. Die Methode nach Anspruch 24 **dadurch gekennzeichnet, dass** die Unterordnungsdecodierungseinrichtung (12) die Sendevorrichtung mit einer Übermittlung der Anspruchskontrollnachricht, geeignet für die Unterordnungsdecodierungseinrichtung (12), belegt.

29. Die Methode nach Anspruch 24 **dadurch gekennzeichnet, dass** die Hauptdecodierungseinrichtung (11) und die Unterordnungsdecodierungseinrichtung (12), wenn sie eingeschaltet sind, zuerst jegliche Nachrichten überprüfen, welche von anderen Einrichtungen gesendet wurden, bevor sie beginnen Nachrichten zu übertragen.

30. Die Methode nach Anspruch 24 **dadurch gekennzeichnet, dass** die Unterordnungsdecodierungseinrichtung (12) die Hauptdecodierungseinrichtung (11), die Anspruchskontrollnachricht, geeignet für die Unterordnungsdecodierungseinrichtung (12) und Nachrichten mit einer Verbindungsaufforderung, auslöst.

31. Die Methode nach Anspruch 24 **dadurch gekennzeichnet, dass** eine Zeiteinheit für die Verbindung der Hauptdecodierungseinrichtung (11) mit der Unterordnungsdecodierungseinrichtung (12) vorangesetzt ist.

32. Die Methode nach Anspruch 24 **dadurch gekennzeichnet, dass** ein bestimmter Abstand zwischen der Hauptdecodierungseinrichtung (11) und mindestens der Unterordnungsdecodierungseinrichtung (12), verbunden mit der Hauptdecodierungseinrichtung von dem Niveau des Signales, welches zwischen der Hauptdecodierungseinrichtung (11) und der Unterordnungsdecodierungseinrichtung (12) ausgetauscht wird, entschieden wird.

33. Die Methode nach Anspruch 24 **dadurch gekennzeichnet, dass** die Decodierungseinrichtungen dem Status der Hauptdecodierungseinrichtung (11) und der Unterordnungsdecodierungseinrichtung (12) nach Übertragung von verschlüsselten Nachrichten durch die Sendevorrichtung (3) spezielle Codierungen erzeugend und übertragend, zugeteilt werden.

34. Die Methode nach Anspruch 24 **dadurch gekennzeichnet, dass** ein privates Fernsehnetzwerk (13) eine physische Verbindung mit einem Nachrichtennetzwerk (8) teilt.

35. Die Methode nach Anspruch 24 **dadurch gekennzeichnet, dass** die Anspruchskontrollnachricht der Hauptdecodierungseinrichtung (11) und mindestens einer Unterordnungsdecodierungseinrichtung (12) einen Zugang zu dem Nachrichtennetzwerk ermöglichen, werden nach den verschlüsselten Nachrichten durch die Sendungseinrichtung (3) gesendet, die entworfen ist, spezielle Codes zu erzeugen und zu übertragen.

36. Die Methode nach Anspruch 24 **dadurch gekennzeichnet, dass** die Managementnachrichten, die zu der Hauptdecodierungseinrichtung (11) und der Unterordnungsdecodierungseinrichtung (12) gesendet werden, durch einen Generator (7) generiert sind, der mit einem Mehrfachschaltungsbetreiber (5) und mit anderem Generator (6), welcher Nachrichten hervorbringt, verbunden ist, und die Managementnachrichten, die zu der Hauptdecodierungseinrichtung (11) und der Unterordnungsdecodierungseinrichtung (12) gesendet werden, Anspruchskontrollnachrichten enthalten.

37. Die Methode nach Anspruch 24 **dadurch gekennzeichnet, dass** Nachrichten, die zwischen der Hauptdecodierungseinrichtung (11) und der Unterordnungsdecodierungseinrichtung (12) ausgetauscht werden, sind die Nachrichten, die gebraucht werden um die Hauptdecodierungseinrichtung (11), die Unterordnungsdecodierungseinrichtungen (12, 15) als auch Systeme, die als ihren einzelnen Komponententeilen oder äußeren mit ihnen verbundenden Einrichtungen (267) sind, zu identifizieren.

38. Die Methode nach Anspruch 37 **dadurch gekennzeichnet, dass** Nachrichten, welche benötigt werden, die Hauptdecodierungseinrichtung (11) und die Unterordnungsdecodierungseinrichtungen (12, 15) zu identifizieren, einen Typ der Hauptdecodierungseinrichtung (11) und der Unterordnungsdecodierungseinrichtungen (12, 15), ihrer Version und/oder Seriennummer enthalten.

39. Die Methode nach Anspruch 24 **dadurch gekennzeichnet, dass** Nachrichten, die zwischen der Hauptdecodierungseinrichtung (11) und den Unterordnungsdecodierungseinrichtungen (12, 15) ausgetauscht werden, sind die Nachrichten, die benötigt werden, die Software zu identifizieren.

40. Das Rundfunknetzwerkzugangsverwaltungssystem nach Anspruch 9 **dadurch gekennzeichnet, dass** die Hauptdecodierungseinrichtung (11) und mindestens eine Unterordnungsdecodierungseinrichtung (12) arbeiten, wenn ein Abstand zwischen der Hauptdecodierungseinrichtung (11) und mindestens einer Unterordnungsdecodierungseinrichtung (12) den festgelegten Abstand, abhängig von der Kabellänge, der Konfiguration, einer Zahl und Qualität von Verteilern und Verbindungen, nicht überschritten ist.

## Revendications

1. Système de gestion d'accès à un réseau de télédiffusion comprennant au moins un dispositif décodeur maître équipé d'une carte électronique, et au moins un dispositif décodeur esclave lié au dispositif décodeur maître, et un dispositif transmetteur lequel forme et transmet un message d'autorisation de gestion destiné au dispositif décodeur maître, ledit au moins un dispositif décodeur esclave et les autres dispositifs **caractérisé en ce que** le niveau du signal échangé parmi le dispositif décodeur maître (11) et au moins un dispositif décodeur esclave (12) est comparé avec le niveau du signal envoyé parmi le dispositif décodeur maître et au moins un dispositif décodeur esclave (12) pendant la communication précédente et **en ce qu'**au moins un dispositif décodeur esclave (12) est autorisé d'opérer en tenant compte de la comparaison du niveau du signal échangé parmi le dispositif décodeur maître (11) et au moins un dispositif décodeur esclave (12) avec le niveau du signal envoyé parmi le dispositif décodeur maître et au moins un dispositif décodeur esclave (12) pendant la communication précédente.

2. Système de gestion d'accès à un réseau de télédiffusion selon la revendication 1, **caractérisé en ce que** le dispositif décodeur est attribué le statut d'un dispositif décodeur maître (11) seulement après qu'il est lié au réseau et le message de contrôle d'autorisation pour le dispositif décodeur maître (11) etait trouvé.

3. Système de gestion d'accès à un réseau de télédiffusion selon la revendication 1, **caractérisé en ce que** le dispositif décodeur maître (11) impose à dispositif transmetteur (3) la transmission du message de contrôle d'autorisation spécifique pour le dispositif décodeur maître (11).

4. Système de gestion d'accès à un réseau de télédiffusion selon la revendication 1, **caractérisé en ce que** le dispositif décodeur est attribué le mode d'un dispositif décodeur esclave (12) seulement après qu'il est lié au réseau et le message de contrôle d'autorisation pour le dispositif décodeur esclave (12) etait trouvé.

5. Système de gestion d'accès à un réseau de télédiffusion selon la revendication 1, **caractérisé en ce que** le dispositif décodeur esclave (12) impose à dispositif transmetteur (3) la transmission du message de contrôle d'autorisation spécifique pour le dispositif décodeur esclave (12).

6. Système de gestion d'accès à un réseau de télédiffusion selon la revendication 1, **caractérisé en ce que** le dispositif décodeur maître (11) et le dispositif décodeur esclave (12), quand ils sont mis en service, ils premièrement examinent s'il y a des messages transmis par les autres dispositifs, avant qu'ils commencent la transmission des messages.

7. Système de gestion d'accès à un réseau de télédiffusion selon la revendication 1, **caractérisé en ce que** le dispositif décodeur esclave (12) déclenche la transmission par le dispositif décodeur maître (11) du message de contrôle d'autorisation spécifique pour le dispositif décodeur esclave (12) et les messages de la demande de la mise en service.

8. Système de gestion d'accès à un réseau de télédiffusion selon la revendication 1, **caractérisé en ce que** la longueur du temps pour création du lien du dispositif décodeur maître (11) avec et le dispositif décodeur esclave (12) est fixée préalablement.

9. Système de gestion d'accès à un réseau de télédiffusion selon la revendication 1, **caractérisé en ce que** la distance défini parmi le dispositif décodeur maître (11) et au moins un dispositif décodeur esclave (12) lié au dispositif décodeur maître est déterminée d'après le niveau du signal échangé parmi le dispositif décodeur maître (11) et le dispositif décodeur esclave (12).

10. Système de gestion d'accès à un réseau de télédiffusion selon la revendication 1, **caractérisé en ce que** le statut du dispositif décodeur maître (11) et du dispositif décodeur esclave (12) est attribué aux dispositifs décodeurs après la transmission des messages codés par le dispositif transmetteur (3) lequel crée et transmet des codes déterminés.

11. Système de gestion d'accès à un réseau de télédiffusion selon la revendication 1, **caractérisé en ce que** le réseau de la télévision privée (13) partage des liens physiques avec le réseau de télédiffusion (3).

12. Système de gestion d'accès à un réseau de télédiffusion selon la revendication 1, **caractérisé en ce que** les messages de contrôle d'autorisation permettant le dispositif décodeur maître (11) et au moins un dispositif décodeur esclave (12) l'accès au réseau de télédiffusion sont transmis après que les messages codés ont été envoyés par le dispositif transmetteur (3), lequel est projeté pour création et transmission des codes déterminés.

13. Système de gestion d'accès à un réseau de télédiffusion selon la revendication 1, **caractérisé en ce que** les messages de gestion envoyés au dispositif décodeur maître (11) et au dispositif décodeur esclave (12) sont crées par le générateur (7) lié au multiplexeur (5) à travers d'autre générateur (6) lequel crée les messages, et les messages de gestion envoyés au dispositif décodeur maître (11) et au dispositif décodeur esclave (12) sont inclus dans le message de contrôle d'autorisation.

14. Système de gestion d'accès à un réseau de télédiffusion selon la revendication 1, **caractérisé en ce que** les messages échangés parmi le dispositif décodeur maître (11) et les dispositifs décodeurs esclaves (12, 15) ce sont des messages utilisés pour identification du dispositif décodeur maître (11) et des dispositifs décodeurs esclaves (12, 15), des systèmes qui sont leurs constituants, ou les dispositifs externes (267) liés aux eux.

15. Système de gestion d'accès à un réseau de télédiffusion selon la revendication 14, **caractérisé en ce que** les messages utilisés pour identification du dispositif décodeur maître (11) et des dispositifs décodeurs esclaves (12, 15) comprennent le type du dispositif décodeur maître (11) et les dispositifs décodeurs esclaves (12, 15), leurs version et/ou leur numéro de série.

16. Système de gestion d'accès à un réseau de télédiffusion selon la revendication 1, **caractérisé en ce que** les messages échangés parmi le dispositif décodeur maître (11) et les dispositifs décodeurs esclaves (12, 15) ce sont des messages utilisés pour identification du logiciel.

17. Système de gestion d'accès à un réseau de télédiffusion selon la revendication 16, **caractérisé en ce que** les messages utilisés pour identification du logiciel comprennent le numéro de version et/ou le numéro de série du logiciel.

18. Système de gestion d'accès à un réseau de télédiffusion selon la revendication 1, **caractérisé en ce que** les messages échangés parmi le dispositif décodeur maître (11) et les dispositifs décodeurs esclaves (12, 15) ce sont des messages lequels facilitent l'interaction parmi les dispositifs décodeurs (11, 12, 15), les systèmes constituants, ou parmi les logiciels installés dans les dispositifs décodeurs (11, 12, 15) ou les dispositifs coopérant avec eux.

19. Système de gestion d'accès à un réseau de télédiffusion selon la revendication 1, **caractérisé en ce que** les messages échangés parmi le dispositif décodeur maître (11) et les dispositifs décodeurs esclaves (12, 15) ce sont des messages lequels comprennent le statut d'opération d'un dispositif/logiciel spécifié, le résultat d'une opération spécifiée, l'ordre d'exécuter une opération spécifiée et les données recueilliées et traitées par un dispositif/logiciel spécifié.

20. Système de gestion d'accès à un réseau de télédiffusion selon la revendication 1, **caractérisé en ce que** les messages échangés parmi le dispositif décodeur maître (11) et les dispositifs décodeurs esclaves (12, 15) ce sont des messages soit crées dans les dispositifs décodeurs (11, 12, 15), soit obtenus des sources externes.

21. Système de gestion d'accès à un réseau de télédiffusion selon la revendication 1, **caractérisé en ce que** les messages échangés parmi le dispositif décodeur maître (11) et les dispositifs décodeurs esclaves (12, 15) ce sont des données d'internet, des messages textes, des fluxes et des fichiers des données comprenant des sons, images, vidéo et logiciel, et/ou des mises à jour du logiciel.

22. Système de gestion d'accès à un réseau de télédiffusion selon la revendication 1, **caractérisé en ce que** les messages échangés parmi le dispositif décodeur maître (11) et les dispositifs décodeurs esclaves (12, 15) comprennent des messages additionnels crées par un logiciel installé dans le dispositif décodeur ou les dispositifs coopérant avec eux, ou des messages fournis aux dispositifs décodeurs par des sources externes.

23. Système de gestion d'accès à un réseau de télédiffusion selon la revendication 1, **caractérisé en ce que** les messages échangés parmi le dispositif décodeur maître (11), les dispositifs décodeurs esclaves (12) et les dispositifs externes consistent en des octets synchronisants (300), d'en-tête (301) avec un source et des addresses de destination (302, 303), un type (305) du message, un drapeau (304) avec une information si ledit message contiens des données et un message (306) determinant un volume du bloc des données, et aussi des données (307) constituant un message (compris comme un paquet de flux média), et une somme de contrôle (308).

24. Procédé de gestion de récepteurs fonctionnant dans le réseau de télédiffusion équipés des cartes électroniques, entre lesquels au moins un dispositif c'est un dispositif décodeur maître lié à au moins un dispositif décodeur esclave, et un dispositif transmetteur lequel forme et transmet des messages d'autorisation de fair usage du dispositif décodeur maître, d'au moins un dispositif décodeur et des récepteurs liées aux eux, le procédé de gestion de récepteurs de signaux consistant des étapes de:
lier le dispositif décodeur maître (11) et au moins un dispositif décodeur esclave (12) par une liaison;
contrôler le niveau du signal echangé parmi le dispositif décodeur maître (11) et au moins un dispositif décodeur esclave (12) pour des changements;
comparer le niveau du signal échangé parmi le dispositif décodeur maître (11) et au moins un dispositif décodeur esclave (12) avec le niveau du signal envoyé parmi le dispositif décodeur maître (11) et au moins un dispositif décodeur esclave (12) pendant la communication précédente; et
autoriser le dispositif décodeur esclave (12) d'opérer en tenant compte de la comparaison du niveau du signal échangé parmi le dispositif décodeur maître (11) et au moins un dispositif décodeur esclave (12) avec le niveau du signal envoyé parmi le dispositif décodeur maître et au moins un dispositif décodeur esclave (12) pendant la communication précédente.

25. Procédé selon la revendication 24, **caractérisé en ce que** le dispositif décodeur est attribué le statut d'un dispositif décodeur maître (11) seulement après qu'il est lié au réseau et le message de contrôle d'autorisation pour le dispositif décodeur maître (11) etait trouvé.

26. Procédé selon la revendication 24, **caractérisé en ce que** le dispositif décodeur maître (11) impose à dispositif transmetteur la transmission du message de contrôle d'autorisation spécifique pour le dispositif décodeur maître (11).

27. Procédé selon la revendication 24, **caractérisé en ce que** le dispositif décodeur est attribué le mode d'un dispositif décodeur esclave (12) seulement après qu'il est lié au réseau et le message de contrôle d'autorisation pour le dispositif décodeur esclave (12) etait trouvé.

28. Procédé selon la revendication 24, **caractérisé en ce que** le dispositif décodeur esclave (12) impose à dispositif transmetteur la transmission du message de contrôle d'autorisation spécifique pour le dispositif décodeur esclave (12).

29. Procédé selon la revendication 24, **caractérisé en ce que** le dispositif décodeur maître (11) et le dispositif décodeur esclave (12), quand ils sont mis en service, ils premièrement examinent s'il y a des messages transmis par les autres dispositifs, avant qu'ils commencent la transmission des messages.

30. Procédé selon la revendication 24, **caractérisé en ce que** le dispositif décodeur esclave (12) déclenche la transmission par le dispositif décodeur maître (11) du message de contrôle d'autorisation spécifique pour le dispositif décodeur esclave (12) et les messages de la demande de la mise en service.

31. Procédé selon la revendication 24, **caractérisé en ce que** la longueur du temps pour création du lien du dispositif décodeur maître (11) avec et le dispositif décodeur esclave (12) est fixée préalablement.

32. Procédé selon la revendication 24, **caractérisé en ce que** la distance défini parmi le dispositif décodeur maître (11) et au moins un dispositif décodeur esclave (12) lié au dispositif décodeur maître est déterminée d'après le niveau du signal échangé parmi le dispositif décodeur maître (11) et le dispositif décodeur esclave (12).

33. Procédé selon la revendication 24, **caractérisé en ce que** les dispositifs décodeurs sont attribués le statut du dispositif décodeur maître (11) et du dispositif décodeur esclave (12) après la transmission des messages codés par le dispositif transmetteur (3) lequel crée et transmet des codes déterminés.

34. Procédé selon la revendication 24, **caractérisé en ce que** le réseau de la télévision privée (13) partage des liens physiques avec le réseau de télédiffusion (3).

35. Procédé selon la revendication 24, **caractérisé en ce que** les messages de contrôle d'autorisation, permettant le dispositif décodeur maître (11) et au moins un dispositif décodeur esclave (12) l'accès au réseau de télédiffusion, sont transmis après que les messages codés ont été envoyés par le dispositif transmetteur (3), lequel est projeté pour création et transmission des codes déterminés.

36. Procédé selon la revendication 24, **caractérisé en ce que** les messages de gestion envoyés au dispositif décodeur maître (11) et au dispositif décodeur esclave (12) sont crées par le générateur (7) lié au multiplexeur (5) à travers d'autre générateur (6) lequel crée les messages, et les messages de gestion envoyés au dispositif décodeur maître (11) et au dispositif décodeur esclave (12) sont inclus dans le message de contrôle d'autorisation.

37. Procédé selon la revendication 24, **caractérisé en ce que** les messages échangés parmi le dispositif décodeur maître (11) et les dispositifs décodeurs esclaves (12, 15) ce sont des messages utilisés pour identification du dispositif décodeur maître (11) et des dispositifs décodeurs esclaves (12, 15), des systèmes qui sont leurs constituants, ou les dispositifs externes (267) liés aux eux.

38. Procédé selon la revendication 37, **caractérisé en ce que** les messages utilisés pour identification du dispositif décodeur maître (11) et des dispositifs décodeurs esclaves (12, 15) comprennent le type du dispositif décodeur maître (11) et les dispositifs décodeurs esclaves (12, 15), leur version et/ou leur numéro de série.

39. Procédé selon la revendication 24, **caractérisé en ce que** les messages échangés parmi le dispositif décodeur maître (11) et les dispositifs décodeurs esclaves (12, 15) ce sont des messages utilisés pour identification du logiciel.

40. Système de gestion d'accès à un réseau de télédiffusion selon la revendication 9, **caractérisé en ce que** le dispositif décodeur maître (11) et au moins un dispositif décodeur esclave (12) opèrent si la distance entre le dispositif décodeur maître (11) et au moins un dispositif décodeur esclave (12) n'est pas plus grande que la distance défini laquelle dépends de la longueur du câble, de la configuration, du nombre et de la qualité des répartiteurs et des lignes.
